# EUROPEAN PATENT APPLICATION

(11) **EP 3 964 278 A1**
(43) Date of publication of application: **09.03.2022**
(21) Application number: 20896661.4
(22) Date of filing: 25.11.2020
(51) Int. Cl.: B01D 53/14, B01D 53/18, B01D 53/50, B01D 53/78, B01D 53/92, F01N 3/04, F01N 3/08, B63H 21/32

(54) **EXHAUST GAS PROCESSING DEVICE**

(30) Priority: 04.12.2019 JP 2019219564
(71) Applicant: Fuji Electric Co., Ltd., Kawasaki-shi, Kanagawa 210-9530 (JP)
(72) Inventor: TAKAHASHI Kuniyuki, Kawasaki-shi, Kanagawa 210-9530 (JP); NODA Naohiro, Kawasaki-shi, Kanagawa 210-9530 (JP)
(74) Representative: MERH-IP Matias Erny Reichl Hoffmann Patentanwälte PartG mbB
(86) International application number: PCT/JP2020/043907
(87) International publication number: WO 2021/111957

(57) **Abstract**

Provided is an exhaust gas treatment apparatus comprising a reaction tower into which an exhaust gas is introduced and a liquid for treating the exhaust gas is supplied, a first ejection unit configured to eject the liquid into the reaction tower, a volumeric flow rate control unit configured to control a volumeric flow rate of the liquid that is supplied to the reaction tower, an exhaust gas introduction pipe configured to introduce the exhaust gas into the reaction tower, and a spray unit configured to spray a drain liquid obtained as a result of treating the exhaust gas to the exhaust gas, in the exhaust gas introduction pipe or in the vicinity of the exhaust gas introduction pipe inside the reaction tower, wherein the volumeric flow rate control unit is configured to control the volumeric flow rate of the liquid that is supplied to the reaction tower, based on at least one of pH and total alkalinity of the drain liquid.

## Description

### BACKGROUND

### 1. TECHNICAL FIELD

The present invention relates to an exhaust gas treatment apparatus.

### 2. RELATED ART

In the related art, known is an exhaust gas treatment apparatus configured to treat an exhaust gas from a power apparatus by chemical absorption and physical absorption (for example, refer to Patent Documents 1 to 3). Also, known is an exhaust gas treatment apparatus configured to reuse water obtained as a result of treating an exhaust gas from a power apparatus for gas treatment (for example, refer to Patent Document 4).
Patent Document 1: Japanese Patent Application Publication No. H10-314537
Patent Document 2: Japanese Patent Application Publication No. 2010-260894
Patent Document 3: Japanese Patent Application Publication No. H6-86911
Patent Document 4: Japanese Patent No. 6188033

### TECHNICAL PROBLEM

In the exhaust gas treatment apparatus, it is preferable to reduce an amount of a liquid for treating the exhaust gas.

### GENERAL DISCLOSURE

A first aspect of the present invention provides an exhaust gas treatment apparatus. The exhaust gas treatment apparatus comprises a reaction tower into which an exhaust gas is introduced and a liquid for treating the exhaust gas is supplied, a first ejection unit configured to eject the liquid into the reaction tower, a volumeric flow rate control unit configured to control a volumeric flow rate of the liquid that is supplied to the reaction tower, an exhaust gas introduction pipe configured to introduce the exhaust gas into the reaction tower, and a spray unit configured to spray a drain liquid obtained as a result of treating the exhaust gas to the exhaust gas, in the exhaust gas introduction pipe or in the vicinity of the exhaust gas introduction pipe inside the reaction tower. The volumeric flow rate control unit is configured to control the volumeric flow rate of the liquid that is supplied to the reaction tower, based on at least one of pH and total alkalinity of the drain liquid.

The volumeric flow rate control unit may also be configured to control the volumeric flow rate of the liquid that is supplied to the reaction tower so that pH of the drain liquid becomes equal to or smaller than 4.

The volumeric flow rate control unit may also be configured to control the volumeric flow rate of the liquid that is supplied to the reaction tower so that the total alkalinity of the drain liquid becomes equal to or smaller than 5mg/L.

The exhaust gas treatment apparatus may further comprise a second ejection unit configured to eject the liquid into the reaction tower. The first ejection unit may be provided on one of an introduction-side and a discharge-side of the exhaust gas inside the reaction tower. The second ejection unit may be provided on the other of the introduction-side and the discharge-side of the exhaust gas inside the reaction tower. The volumeric flow rate control unit may also be configured to control a volumeric flow rate of the liquid that is supplied to at least one of the first ejection unit and the second ejection unit.

The reaction tower may be configured to generate a purified gas obtained as a result of the exhaust gas being treated by the liquid inside the reaction tower. The volumeric flow rate control unit may also be configured to control the volumeric flow rate of the liquid that is supplied to at least one of the first ejection unit and the second ejection unit, based on a concentration of sulfur dioxide and a concentration of carbon dioxide in the purified gas.

The first ejection unit may be provided on the introduction-side of the exhaust gas. The second ejection unit may be provided on the discharge-side of the exhaust gas. The volumeric flow rate control unit may also be configured to control a volumeric flow rate of the liquid that is supplied to the second ejection unit, based on a volumeric flow rate of the liquid that is supplied to the first ejection unit.

The volumeric flow rate control unit may be configured to increase the volumeric flow rate of the liquid that is supplied to the second ejection unit, when the volumeric flow rate of the liquid that is supplied to the first ejection unit is reduced.

The liquid that is ejected from at least one of the first ejection unit and the second ejection unit may treat the exhaust gas while advancing from the discharge-side toward the introduction-side of the exhaust gas inside the reaction tower. The volumeric flow rate control unit may be configured to control the volumeric flow rate of the liquid that is supplied to the reaction tower, based on at least one of pH and total alkalinity of the drain liquid closer to the introduction-side of the exhaust gas than the first ejection unit, in a direction facing from the introduction-side toward the discharge-side of the exhaust gas.

The exhaust gas treatment apparatus may further comprise a liquid supply unit. The liquid supply unit may be configured to supply, to the first ejection unit, the liquid ejected from the second ejection unit and treating the exhaust gas.

The exhaust gas treatment apparatus may further comprise a first heat exchanger configured to cool the drain liquid. The spray unit may also be configured to spray the drain liquid cooled by the first heat exchanger to the exhaust gas.

The exhaust gas introduction pipe may have a first part which is provided at a predetermined first height and through which the exhaust gas passes, and a second part which is provided at a predetermined second height higher than the first height and through which the exhaust gas passes. The first part may be connected to the reaction tower. The spray unit may also be configured to spray the drain liquid to the exhaust gas passing through the first part.

The exhaust gas introduction pipe may have a first part which is provided at a predetermined first height and through which the exhaust gas passes, a second part which is provided at a predetermined second height higher than the first height and through which the exhaust gas passes, and a connecting part whose one end is connected to the first part and the other end is connected to the second part and through which the exhaust gas passes. The first part may be connected to the reaction tower. The spray unit may also be configured to spray the drain liquid to the exhaust gas passing through the connecting part.

The exhaust gas introduction pipe may have a pipe body, and a gas passage part which is provided inside the pipe body and through which the exhaust gas passes. A cross-sectional area of the gas passage part in a plane orthogonal to a direction in which the exhaust gas passes between one end and the other end of the connecting part may be smaller than a cross-sectional area of the gas passage part in the plane at one end and smaller than a cross-sectional area of the gas passage part in the plane at the other end.

The exhaust gas treatment apparatus may further comprise a drain liquid volumeric flow rate control unit configured to control a volumeric flow rate of the drain liquid that is supplied to the spray unit, and a discharge pipe configured to discharge a treatment liquid, which is obtained as a result of the drain liquid sprayed from the spray unit treating the exhaust gas, to an outside of the exhaust gas introduction pipe. The drain liquid volumeric flow rate control unit may be configured to control the volumeric flow rate of the drain liquid that is supplied to the spray unit, based on at least one of pH and total alkalinity of drain water in which the treatment liquid discharged from the discharge pipe and the drain liquid discharged from the reaction tower and treating the exhaust gas are mixed.

The exhaust gas treatment apparatus may further comprise a second heat exchanger configured to recover heat of the drain liquid discharged from the exhaust gas introduction pipe to the discharge pipe.

The exhaust gas treatment apparatus may further comprise a drain liquid volumeric flow rate control unit configured to control a volumeric flow rate of the drain liquid that is supplied to the spray unit. The drain liquid volumeric flow rate control unit may be configured to control the volumeric flow rate of the drain liquid that is supplied to the spray unit, based on at least one of pH and total alkalinity of a treatment liquid obtained as a result of the drain liquid sprayed from the spray unit treating the exhaust gas.

The exhaust gas treatment apparatus may further comprise a drain liquid volumeric flow rate control unit configured to control a volumeric flow rate of the drain liquid that is supplied to the spray unit, and a thermometer configured to measure a temperature of the exhaust gas. The drain liquid volumeric flow rate control unit may be configured to control the volumeric flow rate of the drain liquid that is supplied to the spray unit, based on a temperature of the exhaust gas measured by the thermometer.

The exhaust gas treatment apparatus may further comprise a drain liquid volumeric flow rate control unit configured to control a volumeric flow rate of the drain liquid that is supplied to the spray unit. The drain liquid volumeric flow rate control unit may be configured to control the volumeric flow rate of the drain liquid that is supplied to the spray unit, based on a volumeric flow rate of the liquid that is controlled by the volumeric flow rate control unit.

The exhaust gas treatment apparatus may further comprise a drain liquid volumeric flow rate control unit configured to control a volumeric flow rate of the drain liquid that is supplied to the spray unit, and a volumeric flow rate measurement unit configured to measure a volumeric flow rate of the liquid that is supplied to the reaction tower. The drain liquid volumeric flow rate control unit may be configured to control the volumeric flow rate of the drain liquid that is supplied to the spray unit, based on a volumeric flow rate of the liquid measured by the volumeric flow rate measurement unit.

The exhaust gas introduction pipe may be provided therein with a filling material for enlarging a surface area of the drain liquid.

The exhaust gas introduction pipe may further have a third part through which the exhaust gas passes. The third part may be provided at a predetermined third height lower than the first height and the second height. The third part may be configured to stay the drain liquid.

The exhaust gas treatment apparatus may further comprise an economiser provided to the exhaust gas introduction pipe and configured to cool the exhaust gas.

The exhaust gas treatment apparatus may further comprise a dilution unit configured to dilute the drain liquid with at least a part of the liquid.

The exhaust gas may be discharged from at least one of a main engine and an auxiliary engine of a ship.

The summary clause does not necessarily describe all necessary features of the embodiments of the present invention. The present invention may also be a sub-combination of the features described above.

### BRIEF DESCRIPTION OF THE DRAWINGS

FIG. 1 shows an example of an exhaust gas treatment apparatus 100 according to one embodiment of the present invention.
FIG. 2 shows an example of a relationship between pH of water (H₂O) in which a sulfurous acid gas (SO₂) is dissolved and a molar ratio of a component contained in the water, for a case where pH is equal to or smaller than 5.
FIG. 3 shows another example of the exhaust gas treatment apparatus 100 according to one embodiment of the present invention.
FIG. 4 shows another example of the exhaust gas treatment apparatus 100 according to one embodiment of the present invention.
FIG. 5 shows another example of the exhaust gas treatment apparatus 100 according to one embodiment of the present invention.
FIG. 6 shows an example of details of an exhaust gas introduction pipe 32 of the exhaust gas treatment apparatus 100 shown in FIG. 5.
FIG. 7 shows another example of details of the exhaust gas introduction pipe 32 of the exhaust gas treatment apparatus 100 shown in FIG. 5.
FIG. 8 shows another example of details of the exhaust gas introduction pipe 32 of the exhaust gas treatment apparatus 100 shown in FIG. 5.
FIG. 9 shows another example of details of the exhaust gas introduction pipe 32 of the exhaust gas treatment apparatus 100 shown in FIG. 5.
FIG. 10 shows another example of details of the exhaust gas introduction pipe 32 of the exhaust gas treatment apparatus 100 shown in FIG. 5.
FIG. 11 shows another example of details of the exhaust gas introduction pipe 32 of the exhaust gas treatment apparatus 100 shown in FIG. 5.
FIG. 12 shows another example of details of the exhaust gas introduction pipe 32 of the exhaust gas treatment apparatus 100 shown in FIG. 5.
FIG. 13 shows another example of the exhaust gas treatment apparatus 100 according to one embodiment of the present invention.
FIG. 14 shows another example of details of the exhaust gas introduction pipe 32 of the exhaust gas treatment apparatus 100 shown in FIG. 5.
FIG. 15 shows another example of details of the exhaust gas introduction pipe 32 of the exhaust gas treatment apparatus 100 shown in FIG. 5.
FIG. 16 shows another example of details of the exhaust gas introduction pipe 32 of the exhaust gas treatment apparatus 100 shown in FIG. 5.
FIG. 17 shows an example of a shape of a connecting part 37 shown in FIG. 16, as seen from above.
FIG. 18 shows another example of details of the exhaust gas introduction pipe 32 of the exhaust gas treatment apparatus 100 shown in FIG. 5.
FIG. 19 shows another example of details of the exhaust gas introduction pipe 32 of the exhaust gas treatment apparatus 100 shown in FIG. 5.
FIG. 20 shows an example of a control flow of the exhaust gas treatment apparatus 100 according to one embodiment of the present invention.
FIG. 21 is a block diagram showing an example of details of a volumeric flow rate control on a liquid 40 in step S120 of FIG. 20.
FIG. 22 is a block diagram showing an example of details of a volumeric flow rate control on a drain liquid 46 in step S130 of FIG. 20.
FIG. 23 is a block diagram showing an example of details of the volumeric flow rate control on the liquid 40 in step S120 of FIG. 20 and another example of details of the volumeric flow rate control on the drain liquid 46 in step S130.
FIG. 24 is a block diagram showing another example of details of the volumeric flow rate control on the drain liquid 46 in step S130 of FIG. 20.
FIG. 25 is a block diagram showing another example of details of the volumeric flow rate control on the drain liquid 46 in step S130 of FIG. 20.
FIG. 26 is a block diagram showing another example of details of the volumeric flow rate control on the drain liquid 46 in step S130 of FIG. 20.

### DESCRIPTION OF EXEMPLARY EMBODIMENTS

Hereinafter, the present invention will be described through embodiments of the invention. However, the following embodiments do not limit the invention defined in the claims. Also, all combinations of features described in the embodiments are not necessarily essential to solutions of the invention.

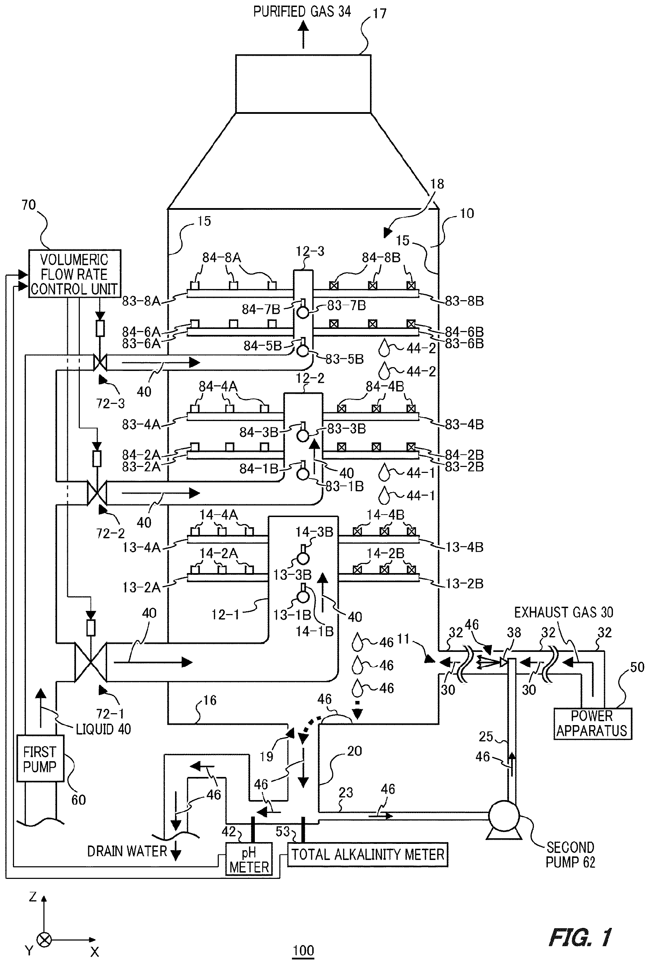

FIG. 1 shows an example of an exhaust gas treatment apparatus 100 according to one embodiment of the present invention. The exhaust gas treatment apparatus 100 comprises a reaction tower 10, a volumeric flow rate control unit 70, an exhaust gas introduction pipe 32 and a spray unit 38. The exhaust gas treatment apparatus 100 may comprise a power apparatus 50 and a first pump 60.

The power apparatus 50 is, for example, an engine, a boiler and the like. The power apparatus 50 is configured to discharge an exhaust gas 30. The exhaust gas introduction pipe 32 is configured to connect the power apparatus 50 and the reaction tower 10. The exhaust gas 30 is introduced into the reaction tower 10. In the present example, the exhaust gas 30 discharged from the power apparatus 50 passes through the exhaust gas introduction pipe 32 and is then introduced into the reaction tower 10.

A liquid 40 for treating the exhaust gas 30 is supplied to the reaction tower 10. In the present example, the liquid 40 is supplied to the reaction tower 10 by the first pump 60. The liquid 40 supplied to the reaction tower 10 treats the exhaust gas 30 inside the reaction tower 10. The description "treats the exhaust gas 30" refers to removing harmful substances (which will be described later) contained in the exhaust gas 30. The liquid 40 becomes a drain liquid 46 (which will be described later) after treating the exhaust gas 30.

The volumeric flow rate control unit 70 is configured to control a volumeric flow rate of the liquid 40 that is supplied to the reaction tower 10. The volumeric flow rate of the liquid 40 that is supplied to the reaction tower 10 refers to a volume of the liquid 40 that is supplied to the reaction tower 10 per unit time.

The volumeric flow rate control unit 70 may have a valve 72. In the present example, the volumeric flow rate control unit 70 is configured to control a volumeric flow rate of the liquid 40, which is supplied from the first pump 60 to a first ejection unit 14 (which will be described later) and a second ejection unit 84 (which will be described later), by the valve 72. In the present example, the volumeric flow rate control unit 70 has three valves 72 (a valve 72-1, a valve 72-2 and a valve 72-3). In the present example, the volumeric flow rate control unit 70 is configured to control a volumeric flow rate of the liquid 40, which is supplied to a trunk tube 12-1, a trunk tube 12-2 and a trunk tube 12-3, respectively by the valve 72-1, the valve 72-2 and the valve 72-3. The trunk tube 12 will be described later.

The spray unit 38 is configured to spray the drain liquid 46 (which will be described later) obtained as a result of treating the exhaust gas 30 to the exhaust gas 30. In the present example, the spray unit 38 is provided inside the exhaust gas introduction pipe 32. In the present example, the spray unit 38 is provided in a passage of the exhaust gas 30 inside the exhaust gas introduction pipe 32. In the present example, the spray unit 38 is configured to spray the drain liquid 46 (which will be described later) into the exhaust gas introduction pipe 32. In the present example, the spray unit 38 is configured to spray the drain liquid 46 (which will be described later) to the exhaust gas 30 that is introduced into the reaction tower 10.

A structure of the exhaust gas introduction pipe 32, and arrangement of the spray unit 38 in the exhaust gas introduction pipe 32 will be described later in detail.

In FIG. 1, the spray unit 38 is provided in the exhaust gas introduction pipe 32 between a gas introduction opening 11 (which will be described later) of the reaction tower 10 and the power apparatus 50.

In the present example, the reaction tower 10 has a sidewall 15, a bottom surface 16, a gas outlet 17, and a gas treatment part 18. In the present example, the reaction tower 10 has a circular column shape. In the present example, the sidewall 15 and the bottom surface 16 are respectively a side surface and a bottom surface of the reaction tower 10 having a circular column shape. The bottom surface 16 is a surface on which the drain liquid 46 (which will be described later) drops, and is also a surface that is in contact with the gas treatment part 18 inside the reaction tower 10. The sidewall 15 is an inner surface that is contact with the gas treatment part 18 inside the reaction tower 10.

In the present example, the gas outlet 17 is arranged in a position facing the bottom surface 16 in a central axis direction of the reaction tower 10 having a circular column shape. The gas treatment part 18 is a space surrounded by the sidewall 15, the bottom surface 16 and the gas outlet 17. The gas treatment part 18 is a space for treating the exhaust gas 30 inside the reaction tower 10.

In the present specification, the technical matters may be described using orthogonal coordinate axes of an X-axis, a Y-axis and a Z-axis. In the present specification, a plane parallel to the bottom surface 16 of the reaction tower 10 is referred to as 'XY plane', and a direction (a direction perpendicular to the bottom surface 16) facing from the bottom surface 16 toward the gas outlet 17 is referred to as 'Z-axis'. In the present specification, a predetermined direction in the XY plane is referred to as 'X-axis direction', and a direction orthogonal to the X-axis in the XY plane is referred to as 'Y-axis direction'.

In the present specification, the side of the gas outlet 17 is referred to as 'upper' and the side of the bottom surface 16 is referred to as 'lower'. The Z-axis direction may be a gravity direction, and the XY plane may be a horizontal plane. In the present example, the Z-axis direction is the gravity direction. However, the direction of 'upper' and 'lower' is not limited to the gravity direction. In the present specification, the description 'as seen from above' refers to a case where the exhaust gas treatment apparatus 100 is seen in the direction facing from the gas outlet 17 toward the bottom surface 16 in the Z-axis direction. In a case where the exhaust gas treatment apparatus 100 is mounted on a ship and the like, the bottom surface 16 may be placed on the ship.

In the present example, the reaction tower 10 has a gas introduction opening 11 for introducing the exhaust gas 30. In the present example, the exhaust gas 30 passes through the gas introduction opening 11 from the exhaust gas introduction pipe 32 and is then introduced into the gas treatment part 18. The gas introduction opening 11 may be provided on the sidewall 15. The gas introduction opening 11 may be provided below (on the bottom surface 16-side) the first ejection unit 14 (which will be described later).

The exhaust gas 30 introduced into the reaction tower 10 is treated by the liquid 40 in the gas treatment part 18. An inner wall of the gas treatment part 18 is formed of a material having durability against the exhaust gas 30, the liquid 40 (seawater or alkaline liquid), a liquid 44 (which will be described later) and the drain liquid 46 (which will be described later). The material may be a combination of an iron material such as SS400 or S-TEN (registered trademark) and at least one of a coating agent and a painting agent, a copper alloy such as naval brass, an aluminum alloy such as aluminum brass, a nickel alloy such as cupronickel, Hastelloy (registered trademark), and stainless steel such as SUS316L, SUS329J4L, or SUS312.

In a case where the exhaust gas treatment apparatus 100 is a scrubber for a ship, the scrubber may be a cyclone type.

In a case where the scrubber is a cyclone type, the exhaust gas 30 introduced into the reaction tower 10 advances from the introduction-side (bottom surface 16-side) toward the discharge-side (gas outlet 17-side) of the exhaust gas 30 in a spiral shape inside the reaction tower 10. In a case where the exhaust gas treatment apparatus 100 is a scrubber for a ship, the power apparatus 50 is, for example, an engine, a boiler and the like of the ship, the exhaust gas 30 is, for example, an exhaust gas that is discharged from the engine and the boiler, and the liquid 40 for treating the exhaust gas 30 is, for example, seawater. The liquid 40 may be alkaline water to which at least one of sodium hydroxide (NaOH) and sodium hydrogen carbonate (Na₂CO₃) is added.

The exhaust gas 30 contains harmful substances such as sulfur oxides (SOₓ). The sulfur oxide (SOₓ) is, for example, sulfurous acid gas (SO₂). In the present example, the liquid 40 removes the harmful substances contained in the exhaust gas 30 mainly by chemical absorption.

In a case where the liquid 40 is an aqueous solution of sodium hydroxide (NaOH), a reaction between the sulfurous acid gas (SO₂) contained in the exhaust gas 30 and sodium hydroxide (NaOH) is expressed by the following chemical formula 1.

[Chemical Formula 1] SO₂+Na⁺+OH⁻ → Na+HSO₃⁻

The above-described chemical absorption refers to a chemical reaction expressed by the chemical formula 1 in which sulfurous acid gas (SO₂) is converted to bisulfite ion (HSO₃⁻) Thereby, the harmful substances such as sulfur oxides (SOₓ) contained in the exhaust gas 30 are removed. The bisulfite ions (HSO₃⁻) are contained in the liquid 44 (which will be described later) and the drain liquid 46 (which will be described later) after the chemical reaction expressed by the chemical formula 1.

The physical absorption refers to a reaction of removing sulfur oxides (SOₓ) by dissolving sulfur oxides (SOₓ) in a liquid, as they are. As described later, in the present example, the sulfur oxides (SOₓ) contained in the exhaust gas 30 are removed by spraying the drain liquid 46 (which will be described later) to the exhaust gas 30.

In the present example, the liquid 40 is a liquid before removing the harmful substances contained in the exhaust gas 30 from the exhaust gas 30 by the chemical absorption. The liquid 40 is a liquid before being ejected from a first ejection unit 14 (which will be described later) and a second ejection unit 84 (which will be described later).

The liquid 44 is a liquid ejected from the first ejection unit 14 (which will be described later) and the second ejection unit 84 (which will be described later), and is a liquid before it becomes the drain liquid 46 (which will be described later). In the present example, the liquid 44 is a liquid that is present above (on the gas outlet 17-side) the first ejection unit 14 (which will be described later) in the gas treatment part 18. The liquid 40 removes the harmful substances contained in the exhaust gas 30 by the chemical absorption and thus becomes the liquid 44 between the first ejection unit 14 (which will be described later) and the second ejection unit 84 (which will be described later) in the Z-axis direction. The liquid 44 may also be a liquid that can further remove the harmful substances.

The liquid 44 may be present below the first ejection unit 14 (which will be described later). When the liquid 44 is present below the first ejection unit 14 (which will be described later), the liquid 44 may further chemically absorb the harmful substances contained in the exhaust gas 30 while passing through a drain water pipe 20, a recovery pipe 23 and an introduction pipe 25. When the liquid 44 further chemically absorbs the harmful substances, the chemical absorption of the harmful substances by the liquid 44 may reach a saturation state. When the chemical absorption of the harmful substances by the liquid 44 reaches a saturation state, the liquid 44 becomes the drain liquid 46 (which will be described later). The spray unit 38 may be configured to spray the drain liquid 46.

In the present example, the drain liquid 46 is a liquid that is present below (on the bottom surface 16-side) the first ejection unit 14 (which will be described later) in the gas treatment part 18. The liquid 40 that is ejected from the first ejection unit 14 and the liquid 44 that drops from above the first ejection unit 14 further remove at least a part of the harmful substances contained in the exhaust gas 30 from the exhaust gas 30 by the chemical absorption, between the bottom surface 16 and the first ejection unit 14 (which will be described later) in the Z-axis direction. Thereby, the liquid 40 and the liquid 44 become the drain liquid 46.

The drain liquid 46 may be a liquid for which it is difficult to further remove the harmful substances contained in the exhaust gas 30 by the chemical absorption.

The drain liquid 46 may also be a liquid in which the chemical absorption of the harmful substances by at least one of the liquid 40 and the liquid 44 has reached the saturation state. The drain liquid 46 may also be a liquid that cannot further remove the harmful substances by the chemical absorption. As described later, the drain liquid 46 is sprayed to the exhaust gas 30 by the spray unit 38, so that the harmful substances are physically absorbed to the drain liquid 46. In a case where the drain liquid 46 can further remove the harmful substances by the chemical absorption, the drain liquid 46 sprayed by the spray unit 38 is likely to chemically absorb the substances. For this reason, the drain liquid 46 is preferably a liquid for which it is difficult to further remove the harmful substances by the chemical absorption.

The reaction tower 10 is configured to generate a purified gas 34 obtained as a result of the exhaust gas 30 being treated by at least one of the liquid 40 and the liquid 44 inside the reaction tower 10. The purified gas 34 is a gas obtained by removing the harmful substances such as sulfur oxides (SOₓ) from the exhaust gas 30 by the liquid 40 and the liquid 44 in the gas treatment part 18. The purified gas 34 is discharged from the gas outlet 17.

In the present example, the reaction tower 10 has a liquid outlet 19 and a drain water pipe 20. An inside of the drain water pipe 20 and the gas treatment part 18 are formed to communicate by the liquid outlet 19. In the present example, the liquid 40 (i.e., the drain liquid 46) treating the exhaust gas 30 passes through the liquid outlet 19 and is discharged to the drain water pipe 20.

The liquid outlet 19 may be provided on the bottom surface 16. The liquid outlet 19 may also be provided over the bottom surface 16 and the sidewall 15. The liquid outlet 19 may also be provided between the gas introduction opening 11 of the sidewall 15 and the bottom surface 16 (i.e., below the gas introduction opening 11).

The exhaust gas treatment apparatus 100 may comprise a recovery pipe 23, an introduction pipe 25 and a second pump 62. One end and the other end of the recovery pipe 23 are respectively connected to the drain water pipe 20 and the second pump 62. The recovery pipe 23 is configured to recover a part of the drain liquid 46 discharged to the drain water pipe 20. The other part of the drain liquid 46 discharged to the drain water pipe 20 may be discharged to an outside of the exhaust gas treatment apparatus 100.

The recovery pipe 23 is configured to introduce the recovered drain liquid 46 into the second pump 62. One end and the other end of the introduction pipe 25 are respectively connected to the second pump 62 and the spray unit 38. The introduction pipe 25 is configured to introduce the drain liquid 46 pumped from the second pump 62 into the spray unit 38.

The drain water pipe 20, the recovery pipe 23, the introduction pipe 25 and the exhaust gas introduction pipe 32 are each formed of a material having durability against the exhaust gas 30, the liquid 40 (seawater or alkaline liquid), the liquid 44 and the drain liquid 46. The material may be, for example, a combination of an iron material such as SS400 or S-TEN (registered trademark) and at least one of a coating agent and a painting agent, a copper alloy such as naval brass, an aluminum alloy such as aluminum brass, a nickel alloy such as cupronickel, Hastelloy (registered trademark), and stainless steel such as SUS316L, SUS329J4L, or SUS312.

The spray unit 38 is configured to spray the drain liquid 46 to the exhaust gas 30. The sulfur oxides (SOₓ) contained in the exhaust gas 30 are chemically absorbed by the liquid 40 inside the reaction tower 10. The spray unit 38 may also be configured to spray the drain liquid 46 to the exhaust gas 30 before chemically absorbed by the liquid 40. In the present example, the spray unit 38 is configured to spray the drain liquid 46 to the exhaust gas 30 before introduced into the reaction tower 10. The sulfur oxides (SOₓ) contained in the exhaust gas 30 introduced into the reaction tower 10 are likely to be chemically absorbed by the liquid 40 above (on the gas outlet 17-side) the first ejection unit 14 (which will be described later). Therefore, the drain liquid 46 may be sprayed in the vicinity of the exhaust gas introduction pipe 32 inside the reaction tower 10. The vicinity of the exhaust gas introduction pipe 32 inside the reaction tower 10 refers to the vicinity of the gas introduction opening 11. The exhaust gas 30 in the vicinity of the gas introduction opening 11 inside the reaction tower 10 refers to the exhaust gas 30 inside the reaction tower 10 and below (on the bottom surface 16-side) the first ejection unit 14 (which will be described later). The exhaust gas 30 is the exhaust gas 30 immediately after introduced into the reaction tower 10.

The spray unit 38 may also be configured to spray the drain liquid 46 in a direction facing from an outside toward an inside of the reaction tower 10. The spray unit 38 may also be configured to spray the drain liquid 46 in an advancing direction of the exhaust gas 30 in the exhaust gas introduction pipe 32. The spray unit 38 is configured to spray the drain liquid 46 in the advancing direction of the exhaust gas 30, so that it becomes difficult for the drain liquid 46 to flow back to the power apparatus 50.

The drain liquid 46 is sprayed to the exhaust gas 30, so that at least a part of sulfur oxides (SOₓ) contained in the exhaust gas 30 is physically absorbed to the drain liquid 46. The drain liquid 46 is sprayed to the exhaust gas 30 before the exhaust gas is introduced into the reaction tower 10, so that the exhaust gas treatment apparatus 100 can remove at least a part of sulfur oxides (SOₓ) contained in the exhaust gas 30. Thereby, the exhaust gas treatment apparatus 100 can reduce an amount of sulfur oxides (SOₓ) that are chemically absorbed by the liquid 40 inside the reaction tower 10.

When an amount of sulfur oxides (SOₓ) contained in the exhaust gas 30 introduced into the reaction tower 10 is reduced, the chemical equivalent of the liquid 40 required to neutralize the amount of sulfur oxides (SOₓ) is reduced. Accordingly, the exhaust gas treatment apparatus 100 can reduce a volumeric flow rate of the liquid 40 that is supplied into the reaction tower 10. Thereby, the exhaust gas treatment apparatus 100 can miniaturize the first pump 60. Thereby, in a case where the exhaust gas treatment apparatus 100 is installed in a ship, it is possible to improve the degree of freedom of installation of the first pump 60 of the exhaust gas treatment apparatus 100 in the ship.

The regulation values of a concentration of sulfur (S) in the fuel that can be used for the ship, and a ratio (SO₂/CO₂) of a concentration[ppm] of sulfur dioxide (SO₂) and a concentration of carbon dioxide (CO₂)[%] in the exhaust gas after purification by an exhaust gas purification apparatus are prescribed by the Marine Pollution Control Convention. The regulation values vary depending on the sea areas. In the strictest sea area, the regulation value of the concentration of sulfur (S) is, for example, 0.1 wt% or smaller (as of 2019), and the regulation value of the ratio (SO₂/CO₂) is, for example, 4.3 or smaller. In the present example, the exhaust gas treatment apparatus 100 removes the sulfur oxides (SOₓ) and the like contained in the exhaust gas 30 by the chemical absorption and the physical absorption. Accordingly, the exhaust gas treatment apparatus 100 of the present example can reduce the volumeric flow rate of the liquid 40 while increasing a ratio of removing the sulfur oxides (SOₓ) and the like contained in the exhaust gas 30 by the physical absorption, within a range of meeting the regulation values, depending on the sea areas.

The exhaust gas treatment apparatus 100 may comprise at least one of a pH meter 42 and a total alkalinity meter 53. The exhaust gas treatment apparatus 100 may comprise one of the pH meter 42 and the total alkalinity meter 53, and may not comprise the other. In the example shown in FIG. 1, the exhaust gas treatment apparatus 100 comprises both the pH meter 42 and the total alkalinity meter 53.

In the present example, the pH meter 42 and the total alkalinity meter 53 are provided to the drain water pipe 20. pH and total alkalinity of the drain liquid 46 may be respectively measured by the pH meter 42 and the total alkalinity meter 53. In the present example, at least one of pH of the drain liquid 46 measured by the pH meter 42 and the total alkalinity of the drain liquid 46 measured by the total alkalinity meter 53 is input to the volumeric flow rate control unit 70.

The volumeric flow rate control unit 70 is configured to control a volumeric flow rate of the liquid 40 that is supplied to the reaction tower 10, based on at least one of pH and total alkalinity of the drain liquid 46. The volumeric flow rate control unit 70 may also be configured to reduce the volumeric flow rate of the liquid 40 that is supplied to the reaction tower 10, when at least one of pH and total alkalinity of the drain liquid 46 is greater than a predetermined value. The predetermined value will be described later.

The total alkalinity refers to a value obtained by converting an amount of alkaline components such as hydrogen carbonate, carbonate or hydroxide contained in the liquid into a concentration of calcium carbonate (CaCO₃). As described later, when the liquid 40 and the liquid 44 remove the sulfur oxides (SOₓ) by the chemical absorption, pH of the liquid 40 and the liquid 44 is reduced. When the liquid 40 and the liquid 44 remove the sulfur oxides (SOₓ) by the chemical absorption, the total alkalinities of the liquid 40 and the liquid 44 are reduced.

The volumeric flow rate control unit 70 may also be configured to control the volumeric flow rate of the liquid 40 that is supplied to the reaction tower 10, based on both pH and total alkalinity of the drain liquid 46. In this case, as compared to a configuration where the volumeric flow rate control unit 70 controls the volumeric flow rate of the liquid 40 based on one of pH and total alkalinity of the drain liquid 46, the volumeric flow rate control unit 70 can control the volumeric flow rate of the liquid 40 and a timing to change the volumeric flow rate more accurately.

The exhaust gas treatment apparatus 100 of the present example further comprises a trunk tube 12, a first branch pipe 13 and a second branch pipe 83. The exhaust gas treatment apparatus 100 may further comprise a plurality of trunk tubes 12, a plurality of first branch pipes 13 and a plurality of second branch pipes 83. In the present example, the first branch pipe 13 and the second branch pipe 83 are connected to the trunk tube 12.

The exhaust gas treatment apparatus 100 comprises a first ejection unit 14. The exhaust gas treatment apparatus 100 may further comprise a second ejection unit 84. The first ejection unit 14 and the second ejection unit 84 are configured to eject the liquid 40 into the reaction tower 10. The first ejection unit 14 may be provided on one of the introduction-side (bottom surface 16-side) and the discharge-side (gas outlet 17-side) of the exhaust gas 30 inside the reaction tower 10. In the present example, the first ejection unit 14 is provided on the introduction-side (bottom surface 16-side) of the exhaust gas 30. The second ejection unit 84 may be provided on the other of the introduction-side (bottom surface 16-side) and the discharge-side (gas outlet 17-side) of the exhaust gas 30 inside the reaction tower 10. In the present example, the second ejection unit 84 is provided on the discharge-side (gas outlet 17-side) of the exhaust gas 30. In the present example, the first ejection unit 14 is connected to the first branch pipe 13, and the second ejection unit 84 is connected to the second branch pipe 83.

The trunk tube 12, the first branch pipe 13, and the second branch pipe 83 are formed of a material having durability against the exhaust gas 30, the liquid 40 (seawater or alkaline liquid), the liquid 44 and the drain liquid 46. The material may be, for example, a combination of an iron material such as SS400 or S-TEN (registered trademark) and at least one of a coating agent and a painting agent, a copper alloy such as naval brass, an aluminum alloy such as aluminum brass, a nickel alloy such as cupronickel, Hastelloy (registered trademark), and stainless steel such as SUS316L, SUS329J4L, or SUS312.

In the present example, the exhaust gas treatment apparatus 100 comprises a trunk tube 12-1, a trunk tube 12-2 and a trunk tube 12-3. In the present example, the trunk tube 12-1 and the trunk tube 12-3 are the trunk tubes 12 respectively provided on a side closest to the bottom surface 16 and on a side closest to the gas outlet 17 in the Z-axis direction. In the present example, the trunk tube 12-2 is the trunk tube 12 provided between the trunk tube 12-1 and the trunk tube 12-3 in the Z-axis direction.

The exhaust gas treatment apparatus 100 of the present example comprises a first branch pipe 13-1 to a first branch pipe 13-4. In the present example, the first branch pipe 13-1 and the first branch pipe 13-4 are the first branch pipes 13 respectively provided on a side closest to the bottom surface 16 and on a side closest to the gas outlet 17 in the Z-axis direction. In the present example, the first branch pipe 13-1 and the first branch pipe 13-3 extend in the Y-axis direction, and the first branch pipe 13-2 and the first branch pipe 13-4 extend in the X-axis direction.

The first branch pipe 13-1 and the first branch pipe 13-3 may be provided on both sides of the trunk tube 12-1 in the Y-axis direction. The first branch pipe 13-2 and the first branch pipe 13-4 may be provided on both sides of the trunk tube 12-1 in the X-axis direction. Taking the first branch pipe 13-1 as an example, a first branch pipe 13-1A and a first branch pipe 13-1B are the first branch pipes 13-1 respectively provided on one side and on the other side of the trunk tube 12-1 in the Y-axis direction. The first branch pipe 13-1A and the first branch pipe 13-1B may be provided so that the trunk tube 12-1 is located therebetween in the Y-axis direction. Note that, in FIG. 1, the first branch pipe 13-1A and the first branch pipe 13-3A are not shown because they are arranged in positions overlapping the trunk tube 12-1.

The exhaust gas treatment apparatus 100 of the present example comprises a second branch pipe 83-1 to a second branch pipe 83-8. In the present example, the second branch pipe 83-1 and the second branch pipe 83-8 are the second branch pipes 83 respectively provided on a side closest to the bottom surface 16 and on a side closest to the gas outlet 17 in the Z-axis direction. In the present example, the second branch pipe 83-1, the second branch pipe 83-3, the second branch pipe 83-5 and the second branch pipe 83-7 extend in the Y-axis direction, and the second branch pipe 83-2, the second branch pipe 83-4, the second branch pipe 83-6 and the second branch pipe 83-8 extend in the X-axis direction.

The second branch pipe 83-1 and the second branch pipe 83-3 may be arranged on both sides of the trunk tube 12-2 in the Y-axis direction. The second branch pipe 83-5 and the second branch pipe 83-7 may be provided on both sides of the trunk tube 12-3 in the Y-axis direction. Taking the second branch pipe 83-1 as an example, a second branch pipe 83-1A and a second branch pipe 83-1B are the second branch pipes 83-1 respectively provided on one side and on the other side of the trunk tube 12-2 in the Y-axis direction. The second branch pipe 83-1A and the second branch pipe 83-1B may be provided so that the trunk tube 12-2 is located therebetween in the Y-axis direction. Note that, in FIG. 1, the second branch pipe 83-1A and the second branch pipe 83-3A are not shown because they are arranged in positions overlapping the trunk tube 12-2. In FIG. 1, the second branch pipe 83-5A and the second branch pipe 83-7A are not shown because they are arranged in positions overlapping the trunk tube 12-3.

The second branch pipe 83-2 and the second branch pipe 83-4 may be provided on both sides of the trunk tube 12-2 in the X-axis direction. The second branch pipe 83-6 and the second branch pipe 83-8 may be provided on both sides of the trunk tube 12-3 in the X-axis direction. Taking the second branch pipe 83-2 as an example, a second branch pipe 83-2A and a second branch pipe 83-2B are the second branch pipes 83-2 respectively provided on one side and on the other side of the trunk tube 12-2 in the X-axis direction. The second branch pipe 83-2A and the second branch pipe 83-2B may be provided so that the trunk tube 12-2 is located therebetween in the X-axis direction.

The exhaust gas treatment apparatus 100 of the present example comprises a first ejection unit 14-1 to a first ejection unit 14-4. In the present example, the first ejection unit 14-1 to the first ejection unit 14-4 are respectively connected to the first branch pipe 13-1 to the first branch pipe 13-4. As for one first branch pipe 13 extending in the Y-axis direction, a plurality of first ejection units 14 may be respectively provided on both sides of the trunk tube 12-1 in the Y-axis direction. As for one first branch pipe 13 extending in the X-axis direction, a plurality of first ejection units 14 may be respectively provided on both sides of the trunk tube 12-1 in the X-axis direction. Note that, in FIG. 1, the first ejection unit 14-1A and the first ejection unit 14-3A are not shown because they are arranged in positions overlapping the trunk tube 12-1.

The exhaust gas treatment apparatus 100 of the present example comprises a second ejection unit 84-1 to a second ejection unit 84-8. In the present example, the second ejection unit 84-1 to the second ejection unit 84-4 are respectively connected to the second branch pipe 83-1 to the second branch pipe 83-8. As for one second branch pipe 83 extending in the Y-axis direction, a plurality of second ejection units 84 may be respectively provided on both sides of the trunk tube 12-2 in the Y-axis direction or a plurality of second ejection units 84 may be respectively provided on both sides of the trunk tube 12-3 in the Y-axis direction. As for one second branch pipe 83 extending in the X-axis direction, a plurality of second ejection units 84 may be respectively provided on both sides of the trunk tube 12-2 in the X-axis direction or a plurality of second ejection units 84 may be respectively provided on both sides of the trunk tube 12-3 in the X-axis direction.

Note that, in FIG. 1, the second ejection unit 84-1A and the second ejection unit 84-3A are not shown because they are arranged in positions overlapping the trunk tube 12-2. In FIG. 1, the second ejection unit 84-5A and the second ejection unit 84-7A are not shown because they are arranged in positions overlapping the trunk tube 12-3.

In the present example, the first ejection unit 14 and the second ejection unit 84 each have an opening surface for ejecting the liquid 40. In FIG. 1, the opening surface is denoted as a mark 'x'. As for one first branch pipe 13, the respective opening surfaces of the first ejection units 14 arranged on one side and the other side of the trunk tube 12-1 may point one direction and the other direction forming a predetermined angle with the extension direction of the first branch pipe 13. The predetermined angle may be 30 degrees or greater and 90 degrees or smaller. The direction that the opening surface points is a central axis direction in a direction in which the liquid 40 is ejected from the first ejection unit 14.

As for one second branch pipe 83, the respective opening surfaces of the second ejection units 84 arranged on one side and the other side of the trunk tube 12-2 may point one direction and the other direction forming a predetermined angle with the extension direction of the second branch pipe 83. As for one second branch pipe 83, the respective opening surfaces of the second ejection units 84 arranged on one side and the other side of the trunk tube 12-3 may point one direction and the other direction forming the predetermined angle (described above) with the extension direction of the second branch pipe 83.

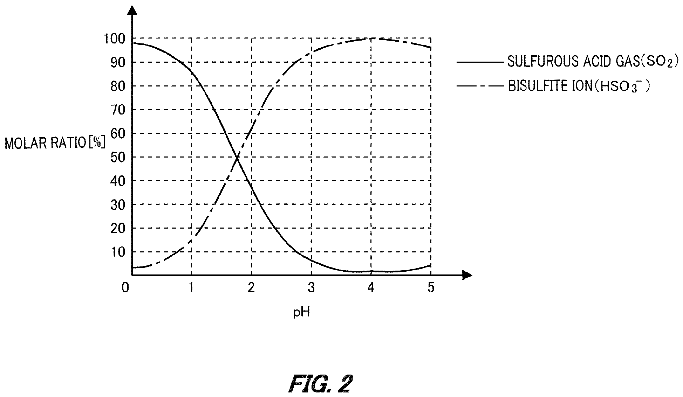

FIG. 2 shows an example of a relationship between pH of water (H₂O) in which a sulfurous acid gas (SO₂) is dissolved and a molar ratio of a sulfurous acid gas (SO₂) component and a molar ratio of bisulfite ions (HSO₃⁻) contained in the water, for a case where pH is equal to or smaller than 5. In FIG. 2, the relationship between pH of the water and the molar ratio of sulfurous acid gas (SO₂) is shown with the solid line, and the relationship between pH of the water and the molar ratio of bisulfite ions (HSO₃⁻) is shown with the dashed-dotted line. The solid line and the dashed-dotted line are respectively standardized when the molar ratio of sulfurous acid gas (SO₂) is 100% and when the molar ratio of bisulfite ions (HSO₃⁻) is 100%.

As shown in the above-described chemical formula 1, in a case where the liquid 40 is an aqueous solution of sodium hydroxide (NaOH), the sulfurous acid gas (SO₂) contained in the exhaust gas 30 reacts with sodium hydroxide (NaOH) to generate bisulfite ions (HSO₃⁻) Along with this reaction, an amount of hydroxide ions (OH⁻) contained in the aqueous solution of sodium hydroxide (NaOH) decreases, so that the pH of the aqueous solution of sodium hydroxide (NaOH) decreases.

As shown in FIG. 2, at pH4 or smaller, the molar ratio of the sulfurous acid gas (SO₂) increases as pH decreases, and the molar ratio of bisulfite ions (HSO₃⁻) decreases as pH decreases. That is, at pH4 or smaller, it becomes difficult for the reaction of the above-described chemical formula 1 to occur. At pH4 or smaller, it becomes difficult for the chemical absorption of sulfur oxides (SOₓ) to the liquid 40 (in the present example, the aqueous solution of sodium hydroxide (NaOH)) to occur.

The volumeric flow rate control unit 70 may be configured to control the volumeric flow rate of the liquid 40 that is supplied to the reaction tower 10, based on pH of the drain liquid 46 measured by the pH meter 42. The volumeric flow rate control unit 70 may be configured to control the volumeric flow rate of the liquid 40 that is supplied to the reaction tower 10 so that pH of the drain liquid 46 becomes equal to or smaller than 4.

When pH of the drain liquid 46 is greater than 4, the drain liquid 46 can further remove the sulfur oxides (SOₓ) by the chemical absorption. There is a case where pH of the drain liquid 46 is greater than 4 and a larger amount of the liquid 40 than the chemical equivalent required to chemically absorb the sulfur oxides (SOₓ) is supplied to the reaction tower 10. In this case, the volumeric flow rate control unit 70 may be configured to reduce the volumeric flow rate of the liquid 40 that is supplied to the reaction tower 10 so that pH of the drain liquid 46 becomes equal to or smaller than 4.

When pH of the drain liquid 46 is equal to or smaller than 4, it is difficult for the drain liquid 46 to further remove the sulfur oxides (SOₓ) by the chemical absorption. There is a case where pH of the drain liquid 46 is equal to or smaller than 4 and an amount of the liquid 40 equal to or smaller than the chemical equivalent required to chemically absorb the sulfur oxides (SOₓ) is supplied to the reaction tower 10. In this case, a part of sulfur oxides (SOₓ) contained in the exhaust gas 30 may be discharged from the gas outlet 17 without being chemically absorbed to the liquid 40. In this case, the volumeric flow rate control unit 70 may be configured to increase the volumeric flow rate of the liquid 40 that is supplied to the reaction tower 10, within a range in which pH of the drain liquid 46 does not exceed 4.

From the above, the volumeric flow rate control unit 70 may be configured to control the volumeric flow rate of the liquid 40 so that pH of the drain liquid 46 is to be equal to or smaller than 4 and the concentration of sulfur oxides (SOₓ) contained in the purified gas 34 meets the regulation value. Thereby, an optimal amount (an amount that is not too much and not too little) of the liquid 40 for chemical absorption of sulfur oxides (SOₓ) is likely to be supplied to the reaction tower 10.

The volumeric flow rate control unit 70 may be configured to control the volumeric flow rate of the liquid 40 that is supplied to the reaction tower 10, based on the total alkalinity of the drain liquid 46 measured by the total alkalinity meter 53. The volumeric flow rate control unit 70 may be configured to control the volumeric flow rate of the liquid 40 that is supplied to the reaction tower 10 so that the total alkalinity of the drain liquid 46 becomes equal to or smaller than 5mg/L (liter). A relationship between the total alkalinity of water (H₂O) in which the sulfurous acid gas (SO₂) is dissolved and the molar ratio of components contained in the water shows behaviors similar to FIG. 2. Specifically, at the total alkalinity of 5mg/L (liter) or smaller, the molar ratio of the sulfurous acid gas (SO₂) increases as the total alkalinity decreases, and the molar ratio of bisulfite ions (HSO₃⁻) decreases as the total alkalinity decreases.

In a case where the total alkalinity of the drain liquid 46 is greater than 5mg/L (liter), the volumeric flow rate control unit 70 may be configured to reduce the volumeric flow rate of the liquid 40 that is supplied to the reaction tower 10 so that the total alkalinity of the drain liquid 46 becomes 5mg/L (liter). In a case where the total alkalinity of the drain liquid 46 is equal to or greater than 5mg/L (liter), the volumeric flow rate control unit 70 may be configured to increase the volumeric flow rate of the liquid 40 that is supplied to the reaction tower 10, within a range in which the total alkalinity of the drain liquid 46 does not exceed 5mg/L (liter).

Again referring to FIG. 1, in the present example, the liquid 40 is supplied from the outside of the reaction tower 10 to the trunk tube 12 by the first pump 60. In the present example, the liquid 40 supplied to the trunk tube 12 flows in the trunk tube 12 from the bottom surface 16 toward the gas outlet 17 in the Z-axis direction. In the present example, the liquid 40 flowing in the trunk tube 12 flows to the first branch pipe 13 and the second branch pipe 83, and the liquid 40 flowing through the first branch pipe 13 and the second branch pipe 83 is respectively ejected to the gas treatment part 18 from at least one of the first ejection unit 14 and the second ejection unit 84.

The liquid 44 ejected to the gas treatment part 18 from the first ejection unit 14 and the second ejection unit 84 treats the exhaust gas 30 while advancing from the discharge-side (gas outlet 17-side) toward the introduction-side (bottom surface 16-side) of the exhaust gas 30 inside the reaction tower 10. In the present example, the liquid 40 treats the exhaust gas 30 while dropping from the gas outlet 17-side toward the bottom surface 16-side inside the reaction tower 10.

The volumeric flow rate control unit 70 may be configured to control the volumeric flow rate of the liquid 40 that is supplied to the reaction tower 10, based on at least one of pH and total alkalinity of the drain liquid 46 closer to the introduction-side (bottom surface 16-side) of the exhaust gas 30 than the first ejection unit 14 in the direction facing from the introduction-side (bottom surface 16-side) toward the discharge-side (gas outlet 17-side) of the exhaust gas 30. In the present example, the gas introduction opening 11 is provided between the bottom surface 16 and the first ejection unit 14 in the Z-axis direction, and the liquid 40 treats the exhaust gas 30 while dropping in the Z-axis direction inside the reaction tower 10. For this reason, the drain liquid 46 is likely to be a liquid for which it is difficult to chemically absorb the harmful substances such as sulfur oxides (SOₓ) contained in the exhaust gas 30. Accordingly, the spray unit 38 sprays the drain liquid 46 to the exhaust gas 30 before the sulfur oxides (SOₓ) and the like are chemically absorbed, so that the exhaust gas treatment apparatus 100 can effectively reuse the drain liquid 46 for physical absorption of sulfur oxides (SOₓ) and the like.

The volumeric flow rate control unit 70 may also be configured to control a volumeric flow rate of the liquid 40 that is supplied to at least one of the first ejection unit 14 and the second ejection unit 84. The volumeric flow rate control unit 70 may be configured to control the volumeric flow rate of the liquid 40 so that the volumeric flow rate of the liquid 40 to be supplied to the trunk tube 12-1 becomes greater than the volumeric flow rate of the liquid 40 to be supplied to the trunk tube 12-2. The volumeric flow rate control unit 70 may be configured to control the volumeric flow rate of the liquid 40 so that the volumeric flow rate of the liquid 40 to be supplied to the trunk tube 12-2 becomes greater than the volumeric flow rate of the liquid 40 to be supplied to the trunk tube 12-3. A ratio of the volumeric flow rate of the liquid 40 to be supplied to the trunk tube 12-1, the volumeric flow rate of the liquid 40 to be supplied to the trunk tube 12-2, and the volumeric flow rate of the liquid 40 to be supplied to the trunk tube 12-3 is, for example, 9:2:1.

The volumeric flow rate control unit 70 may also be configured to control the volumeric flow rate of the liquid 44 by controlling the volumeric flow rate of the liquid 40. As described above, the liquid 40 chemically absorbs the sulfur oxides (SOₓ) and the like contained in the exhaust gas 30, so that the liquid 44 is generated. Accordingly, the volumeric flow rate control unit 70 can control the volumeric flow rate of the liquid 44 by controlling the volumeric flow rate of the liquid 40.

An amount per unit time of the liquid 40 to be ejected from one first ejection unit 14 may be larger than an amount per unit time of the liquid 40 to be ejected from one second ejection unit 84. An amount per unit time of the liquid 40 to be ejected from one second ejection unit 84 among the second ejection unit 84-1 to the second ejection unit 84-4 may be larger than an amount per unit time of the liquid 40 to be ejected from one second ejection unit 84 among the second ejection unit 84-5 to the second ejection unit 84-8. A ratio of the amount per unit time of the liquid 40 to be ejected from one first ejection unit 14, the amount per unit time of the liquid 40 to be ejected from one second ejection unit 84 among the second ejection unit 84-1 to the second ejection unit 84-4, and the amount per unit time of the liquid 40 to be ejected from one second ejection unit 84 among the second ejection unit 84-5 to the second ejection unit 84-7 may be the same as the ratio of the volumeric flow rate of the liquid 40 to be supplied to the trunk tube 12-1, the volumeric flow rate of the liquid 40 to be supplied to the trunk tube 12-2 and the volumeric flow rate of the liquid 40 to be supplied to the trunk tube 12-3.

In the present example, the gas introduction opening 11 is provided below the first ejection unit 14. Therefore, the concentration of the sulfurous acid gas (SO₂) contained in the exhaust gas 30 on the bottom surface 16-side in the Z-axis direction is likely to be greater than the concentration of the sulfurous acid gas (SO₂) contained in the exhaust gas 30 on the gas outlet 17-side. For this reason, the exhaust gas treatment apparatus 100 can easily remove the sulfurous acid gas (SO₂) contained in the exhaust gas 30 by setting the amount of the liquid 40 to be supplied to the trunk tube 12 on the bottom surface 16-side to be larger than the amount of the liquid 40 to be supplied to the trunk tube 12 on the gas outlet 17-side.

The volumeric flow rate control unit 70 may be configured to control the volumeric flow rate of the liquid 40 that is supplied to the second ejection unit 84, based on the volumeric flow rate of the liquid 40 that is supplied to the first ejection unit 14. The volumeric flow rate control unit 70 may be configured to increase the volumeric flow rate of the liquid 40 that is supplied to the second ejection unit 84, when reducing the volumeric flow rate of the liquid 40 to be supplied to the first ejection unit 14. In a case where the volumeric flow rate of the liquid 40 to be supplied to the trunk tube 12-1 is greater than the volumeric flow rate of the liquid 40 to be supplied to the trunk tube 12-2 and also greater than the volumeric flow rate of the liquid 40 to be supplied to the trunk tube 12-3, when the volumeric flow rate control unit 70 reduces the volumeric flow rate of the liquid 40 to be supplied to the trunk tube 12-1, the concentration of sulfur oxides (SOₓ) contained in the purified gas 34 (refer to FIG. 1) is not likely to meet the predetermined regulation value. In a case where the concentration of sulfur oxides (SOₓ) does not meet the predetermined regulation value, the volumeric flow rate control unit 70 increases the volumeric flow rate of the liquid 40 that is supplied to the second ejection unit 84, so that the exhaust gas treatment apparatus 100 can promote the removal of sulfur oxides (SOₓ) contained in the exhaust gas 30 by the chemical absorption. Accordingly, the exhaust gas treatment apparatus 100 can easily adjust the concentration of sulfur oxides (SOₓ) contained in the purified gas 34 to be smaller than the predetermined regulation value.

The volumeric flow rate control unit 70 may be configured to reduce the volumeric flow rate of the liquid 40 that is supplied to the second ejection unit 84, when increasing the volumeric flow rate of the liquid 40 to be supplied to the first ejection unit 14. In a case where the volumeric flow rate of the liquid 40 to be supplied to the trunk tube 12-1 is greater than the volumeric flow rate of the liquid 40 to be supplied to the trunk tube 12-2 and also greater than the volumeric flow rate of the liquid 40 to be supplied to the trunk tube 12-3, when the volumeric flow rate control unit 70 increases the volumeric flow rate of the liquid 40 to be supplied to the trunk tube 12-1, the concentration of sulfur oxides (SOₓ) contained in the purified gas 34 (refer to FIG. 1) is likely to meet the predetermined regulation value. When the concentration of sulfur oxides (SOₓ) meets the predetermined regulation value, the volumeric flow rate control unit 70 may reduce the volumeric flow rate of the liquid 40 that is supplied to the second ejection unit 84. Thereby, the exhaust gas treatment apparatus 100 can reduce a load of the first pump 60 configured to supply the liquid 40 to the second ejection unit 84. The volumeric flow rate control unit 70 may be configured to independently control each of the volumeric flow rate of the liquid 40 that is supplied to the first ejection unit 14 and the volumeric flow rate of the liquid 40 that is supplied to the second ejection unit 84.

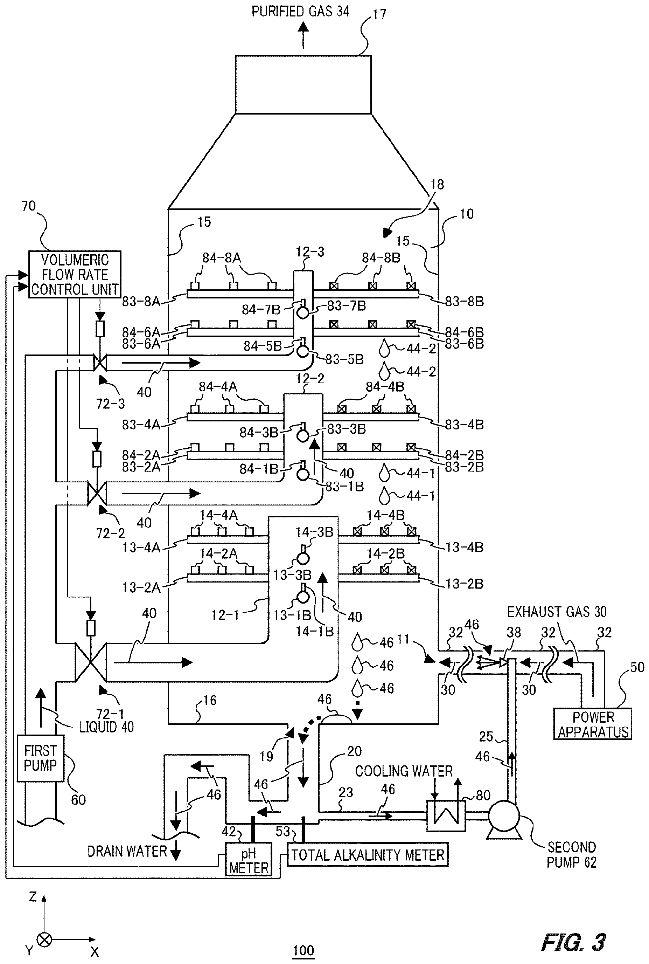

FIG. 3 shows another example of the exhaust gas treatment apparatus 100 according to one embodiment of the present invention. The exhaust gas treatment apparatus 100 shown in FIG. 3 is different from the exhaust gas treatment apparatus 100 shown in FIG. 1, in that a first heat exchanger 80 is further provided. In the present example, the first heat exchanger 80 is provided to the recovery pipe 23. The first heat exchanger 80 may also be provided to the introduction pipe 25.

The first heat exchanger 80 is configured to cool the drain liquid 46 by heat exchange. Cooling water for heat exchange is supplied to the first heat exchanger 80. In the present example, the spray unit 38 is configured to spray the drain liquid 46 cooled by the first heat exchanger 80 to the exhaust gas 30.

As described above, the spray unit 38 sprays the drain liquid 46 to the exhaust gas 30, so that at least a part of sulfur oxides (SOₓ) and the like contained in the exhaust gas 30 is physically absorbed to the drain liquid 46. As the temperature of the drain liquid 46 becomes lower, the physical absorption of sulfur oxides (SOₓ) and the like by the drain liquid 46 is further promoted. In the exhaust gas treatment apparatus 100 of the present example, the spray unit 38 is configured to spray the drain liquid 46 cooled by the first heat exchanger 80 to the exhaust gas 30. Therefore, as compared to a configuration where the spray unit 38 sprays the drain liquid 46 not cooled by the first heat exchanger 80 to the exhaust gas 30, the physical absorption of sulfur oxides (SOₓ) and the like by the drain liquid 46 is further promoted. For this reason, the exhaust gas treatment apparatus 100 can reduce the amount of sulfur oxides (SOₓ) that are chemically absorbed by the liquid 40 inside the reaction tower 10. Accordingly, the exhaust gas treatment apparatus 100 can reduce the volumeric flow rate of the liquid 40 that is supplied into the reaction tower 10.

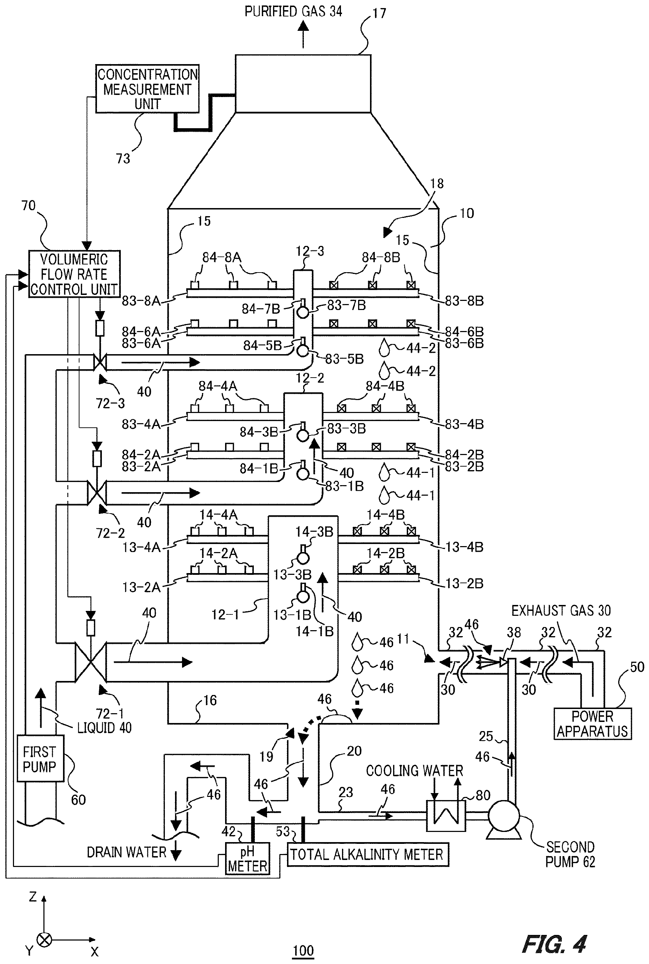

FIG. 4 shows another example of the exhaust gas treatment apparatus 100 according to one embodiment of the present invention. The exhaust gas treatment apparatus 100 shown in FIG. 4 is different from the exhaust gas treatment apparatus 100 shown in FIG. 3, in that a concentration measurement unit 73 is further provided. The concentration measurement unit 73 is configured to measure a concentration of sulfur dioxide (SO₂) and a concentration of carbon dioxide(CO₂) in the purified gas 34. The concentration measurement unit 73 may also be configured to calculate a ratio of the concentration of sulfur dioxide (SO₂) and the concentration of carbon dioxide (CO₂) (concentration of sulfur dioxide (SO₂)/concentration of carbon dioxide (CO₂)). The concentration measurement unit 73 is, for example, a laser type gas analyzer.

The volumeric flow rate control unit 70 may also be configured to control the volumeric flow rate of the liquid 40 that is supplied to at least one of the first ejection unit 14 and the second ejection unit 84, based on the concentration of sulfur oxides (SOₓ) in the purified gas 34. The concentration of sulfur oxides (SOₓ) in the purified gas 34 may be measured by the concentration measurement unit 73.

As described above, the exhaust gas treatment apparatus 100 can reduce the volumeric flow rate of the liquid 40 that is supplied into the reaction tower 10, because at least a part of sulfur oxides (SOₓ) and the like contained in the exhaust gas 30 is physically absorbed to the drain liquid 46. However, when the exhaust gas treatment apparatus 100 reduces the volumeric flow rate of the liquid 40, the amount of sulfur oxides (SOₓ) that are chemically absorbed to the liquid 40 is reduced. For this reason, a concentration of the harmful substances such as sulfur oxides (SOₓ) contained in the purified gas 34 is likely to increase.

In the present example, the volumeric flow rate control unit 70 is configured to control the volumeric flow rate of the liquid 40 that is supplied to at least one of the first ejection unit 14 and the second ejection unit 84, based on the concentration of sulfur oxides (SOₓ) in the purified gas 34. For this reason, when the concentration of sulfur oxides (SOₓ) in the purified gas 34 increases and exceeds the predetermined regulation value, for example, the volumeric flow rate control unit 70 may increase the volumeric flow rate of the liquid 40 that is supplied to at least one of the first ejection unit 14 and the second ejection unit 84. Thereby, the exhaust gas treatment apparatus 100 can reduce the concentration of sulfur oxides (SOₓ) in the purified gas 34.

On the other hand, when the concentration of sulfur oxides (SOₓ) in the purified gas 34 is below the predetermined regulation value, for example, the volumeric flow rate control unit 70 may reduce the volumeric flow rate of the liquid 40 that is supplied to at least one of the first ejection unit 14 and the second ejection unit 84. When the volumeric flow rate of the liquid 40 that is supplied to at least one of the first ejection unit 14 and the second ejection unit 84 is reduced, the concentration of sulfur oxides (SOₓ) in the purified gas 34 is likely to increase. In this case, the volumeric flow rate control unit 70 may be configured to reduce the volumeric flow rate of the liquid 40 that is supplied to at least one of the first ejection unit 14 and the second ejection unit 84, within a range in which the concentration of sulfur oxides (SOₓ) in the purified gas 34 does not exceed the predetermined regulation value.

In the present example, the volumeric flow rate of the liquid 40 that is supplied to the trunk tube 12-3 or the trunk tube 12-2 is smaller than the volumeric flow rate of the liquid 40 that is supplied to the trunk tube 12-1. For this reason, it is easier to finely adjust the concentration of sulfur oxides (SOₓ) in the purified gas 34 when the volumeric flow rate control unit 70 controls the volumeric flow rate of the liquid 40 that is supplied to the second ejection unit 84, rather than controlling the volumeric flow rate of the liquid 40 that is supplied to the first ejection unit 14. When a deviation width of the concentration of sulfur oxides (SOₓ) in the purified gas 34 from the regulation value is smaller than a predetermined width, the volumeric flow rate control unit 70 may control only the volumeric flow rate of the liquid 40 that is supplied to the second ejection unit 84. On the other hand, when the deviation width of the concentration of sulfur oxides (SOₓ) in the purified gas 34 from the regulation value is equal to or greater than the predetermined width, the volumeric flow rate control unit 70 may control only the volumeric flow rate of the liquid 40 that is supplied to the first ejection unit 14.

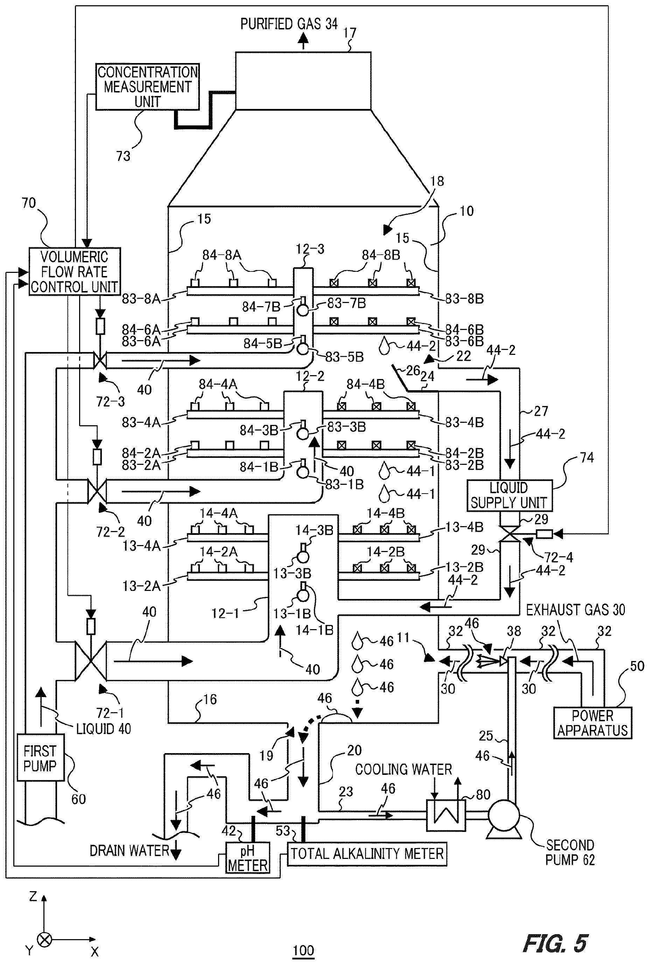

FIG. 5 shows another example of the exhaust gas treatment apparatus 100 according to one embodiment of the present invention. The exhaust gas treatment apparatus 100 shown in FIG. 5 is different from the exhaust gas treatment apparatus 100 shown in FIG. 4, in that an introduction part 22, a liquid supply unit 74, a recovery pipe 27, a supply pipe 29 and a valve 72-4 are further provided. The introduction part 22 is provided inside the reaction tower 10. The recovery pipe 27 is configured to connect the introduction part 22 and the liquid supply unit 74. The supply pipe 29 is configured to connect the liquid supply unit 74 and the trunk tube 12-1. The liquid supply unit 74 may be arranged outside the reaction tower 10.

The introduction part 22 is configured to introduce a part of the liquid 44 into the recovery pipe 27. The liquid 44 is a liquid obtained as a result of the liquid 40 ejected from the second ejection unit 84 treating the exhaust gas 30. In the present example, the introduction part 22 is configured to introduce a part of a liquid 44-2 into the recovery pipe 27. In the present example, the liquid 44-2 is a liquid obtained as a result of the liquid 40 ejected from the second ejection unit 84-5 to the second ejection unit 84-8 treating the exhaust gas 30.

The liquid supply unit 74 is configured to supply the liquid 44 introduced into the recovery pipe 27 to the first ejection unit 14. The liquid supply unit 74 may be a pump. In the present example, the liquid supply unit 74 is configured to supply the liquid 44 introduced into the recovery pipe 27 to the first ejection unit 14 through the supply pipe 29 and the trunk tube 12-1.

In the present example, the volumeric flow rate control unit 70 is configured to control the volumeric flow rate of the liquid 40, which is supplied to the trunk tube 12-1, the trunk tube 12-2 and the trunk tube 12-3, respectively by the valve 72-1, the valve 72-2 and the valve 72-3, and is configured to control the volumeric flow rate of the liquid 44, which is supplied to the first ejection unit 14, by the valve 72-4. The volumeric flow rate control unit 70 may be configured to control either the volumeric flow rate of the liquid 40 or the volumeric flow rate of the liquid 44.

In the present example, the liquid 44 supplied to the trunk tube 12-1 is mixed with the liquid 40 that is supplied by the first pump 60, in the trunk tube 12-1. In the present example, a liquid in which the liquid 44 and the liquid 40 are mixed is ejected from the first ejection unit 14 to the gas treatment part 18.

As described above, the liquid 44 may further remove the harmful substances such as sulfur oxides (SOₓ) contained in the exhaust gas 30 by the chemical absorption, in some cases. For this reason, the exhaust gas treatment apparatus 100 can further remove the harmful substances by the liquid 44 by supplying the liquid 44 to the trunk tube 12-1. Accordingly, the exhaust gas treatment apparatus 100 can reduce a volumeric flow rate of the liquid 40 that is supplied into the reaction tower 10.

The introduction part 22 may have a bottom surface 24 and a side surface 26. The bottom surface 24 may be parallel to the XY plane. In the XZ plane, the side surface 26 may extend in a direction having a predetermined angle with respect to the Z-axis direction or may extend in the Z-axis direction. In the present example, the side surface 26 extends in a direction having a predetermined angle with respect to the Z-axis direction in the XZ plane. The side surface 26 extends in the direction having the predetermined angle with respect to the Z-axis direction in the XZ plane, so that the liquid 44 dropping from above the introduction part 22 is likely to drop onto the side surface 26. For this reason, the liquid 40 dropping on the side surface 26 can be easily introduced into the recovery pipe 27.

The introduction part 22 may be provided at at least a part of the sidewall 15, including an inlet of the liquid 44 to the recovery pipe 27, as seen from above, inside the reaction tower 10. The introduction part 22 may also be provided over the entire surface of the sidewall 15, including the inlet of the liquid 44 to the recovery pipe 27, as seen from above, inside the reaction tower 10. The introduction part 22 may also be provided to go around the sidewall 15, as seen from above, inside the reaction tower 10. The introduction part 22 is provided to go around the sidewall 15, as seen from above, so that the introduction part 22 can easily recover the liquid 44 dropping from above the introduction part 22 over the entire surface of the sidewall 15 inside the reaction tower 10. For this reason, the introduction part 22 can efficiently recover the liquid 44 more easily.

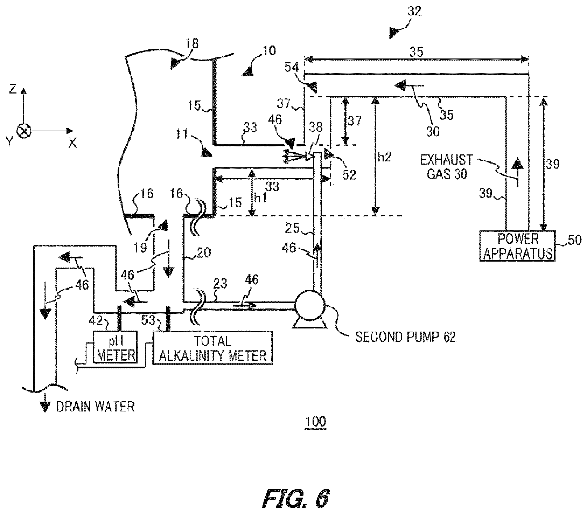

FIG. 6 shows an example of details of the exhaust gas introduction pipe 32 of the exhaust gas treatment apparatus 100 shown in FIG. 5. In FIG. 6, parts of the reaction tower 10 including the gas introduction opening 11 and the liquid outlet 19, the exhaust gas introduction pipe 32 and the drain water pipe 20 are shown. In FIG. 6, the first heat exchanger 80 in FIG. 5 is not shown. Note that, in the present example, the exhaust gas treatment apparatus 100 may comprise the first heat exchanger 80 or not.

The exhaust gas introduction pipe 32 of the present example has a first part 33, a second part 35, a connecting part 37 and a leading part 39. In the present example, one end 52 and the other end 54 of the connecting part 37 are respectively connected to the first part 33 and the second part 35. The connecting part 37 may extend in the gravity direction (Z-axis direction, in the present example). The first part 33, the second part 35, the connecting part 37 and the leading part 39 may be integrally formed.

The first part 33 of the present example is configured to connect the reaction tower 10 and the connecting part 37. The second part 35 of the present example is configured to connect the connecting part 37 and the leading part 39. The leading part 39 of the present example is configured to connect the second part 35 and the power apparatus 50. In the present example, the exhaust gas 30 discharged from the power apparatus 50 passes through the leading part 39, the second part 35, the connecting part 37 and the first part 33 in corresponding order, and is introduced into the gas treatment part 18 of the reaction tower 10.

The first part 33 and the second part 35 of the present example are respectively provided at predetermined first and second heights. In the present example, the first height is a first height h1 from the bottom surface 16 of the reaction tower 10 to a bottom surface of the first part 33. In the present example, the second height is a second height h2 from the bottom surface 16 of the reaction tower 10 to a bottom surface of the second part 35. The second height h2 may be higher than the first height h1.

In the present example, the spray unit 38 is configured to spray the drain liquid 46 to the exhaust gas 30 passing through the first part 33. The spray unit 38 may be provided in a gas passage part (which will be described later) of the first part 33. In the present example, since the second height h2 is higher than the first height h1, as described above, it becomes difficult for the drain liquid 46 sprayed to the first part 33 to flow back to the power apparatus 50. The spray unit 38 may also be configured to spray the drain liquid 46 in an advancing direction of the exhaust gas 30 in the first part 33.

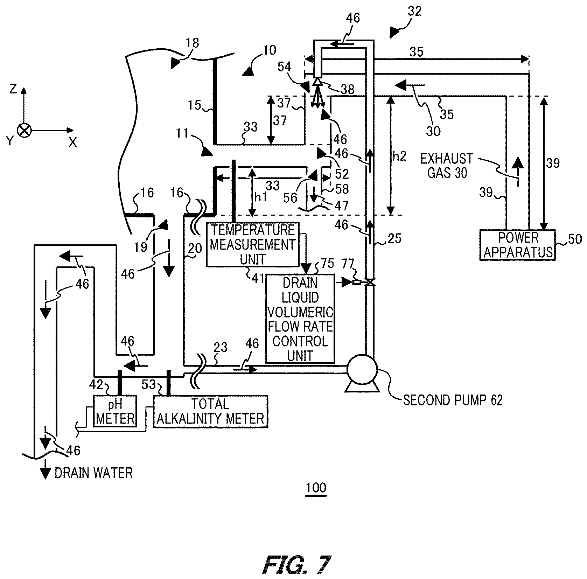

FIG. 7 shows another example of details of the exhaust gas introduction pipe 32 of the exhaust gas treatment apparatus 100 shown in FIG. 5. In the present example, the spray unit 38 is configured to spray the drain liquid 46 to the exhaust gas 30 passing through the connecting part 37. In addition, the exhaust gas treatment apparatus 100 of the present example further comprises a temperature measurement unit 41, a drain liquid volumeric flow rate control unit 75 and a discharge pipe 58. The exhaust gas treatment apparatus 100 of the present example is different from the example shown in FIG. 6, in terms of these matters. An inside of the discharge pipe 58 and an inside (i.e., a gas passage part (which will be described later)) of the exhaust gas introduction pipe 32 are configured to communicate with each other by a drain liquid outlet 56.

In the present example, the spray unit 38 is configured to spray the drain liquid 46 in a direction facing from the second part 35 toward the first part 33 and in the Z-axis direction. In the present example, the spray unit 38 is configured to spray the drain liquid 46 into the connecting part 37 from the upper toward the lower of the connecting part 37. For this reason, it becomes difficult for the drain liquid 46 ejected by the spray unit 38 to flow back to the power apparatus 50.

The drain liquid 46 sprayed by the spray unit 38 treats (physically absorbs) at least a part of sulfur oxides (SOₓ) and the like contained in the exhaust gas 30. The drain liquid 46 treating (physically absorbing) at least a part of sulfur oxides (SOₓ) is referred to as a treatment liquid 47. In the present example, the discharge pipe 58 is configured to discharge the treatment liquid 47 to an outside of the exhaust gas introduction pipe 32. The treatment liquid 47 may also be discharged to an outside of the exhaust gas treatment apparatus 100.

In the exhaust gas treatment apparatus 100 of the present example, since the discharge pipe 58 discharges the treatment liquid 47 to the outside of the exhaust gas introduction pipe 32, it is difficult for the treatment liquid 47 to stay in the exhaust gas introduction pipe 32. Accordingly, in the exhaust gas treatment apparatus 100 of the present example, it is difficult for the exhaust gas introduction pipe 32 to be corroded by the treatment liquid 47.

The temperature measurement unit 41 is configured to measure a temperature of the exhaust gas 30 after the drain liquid 46 is sprayed to the exhaust gas 30 by the spray unit 38. In the present example, the temperature measurement unit 41 is provided to the first part 33. The temperature measurement unit 41 is configured to measure a temperature of the exhaust gas 30 in which at least a part of the harmful substances such as sulfur oxides (SOₓ) contained in the exhaust gas 30 has been treated (physically absorbed) by the drain liquid 46. The temperature measurement unit 41 may also be configured to measure a temperature of the exhaust gas 30 before introduced into the reaction tower 10.

The drain liquid volumeric flow rate control unit 75 of the present example is configured to control the volumeric flow rate of the drain liquid 46 that is supplied to the spray unit 38. In the present example, the drain liquid volumeric flow rate control unit 75 has a valve 77. In the present example, the valve 77 is provided to the introduction pipe 25. In the present example, the drain liquid volumeric flow rate control unit 75 is configured to control a volumeric flow rate of the drain liquid 46, which is supplied from the second pump 62 to the spray unit 38, by the valve 77. The drain liquid volumeric flow rate control unit 75 of the present example is configured to control a volumeric flow rate of the drain liquid 46, which is supplied to the introduction pipe 25, by the valve 77. The drain liquid volumeric flow rate control unit 75 of the present example is configured to control a volumeric flow rate of the drain liquid 46 that is supplied to the spray unit 38, by the same.

The drain liquid volumeric flow rate control unit 75 may have an inverter configured to control the number of rotations of the second pump 62, instead of the valve 77. The drain liquid volumeric flow rate control unit 75 may also be configured to control the volumeric flow rate of the drain liquid 46 by controlling the number of rotations of the second pump 62.

The drain liquid volumeric flow rate control unit 75 may be configured to control the volumeric flow rate of the drain liquid 46 that is supplied to the spray unit 38, based on the temperature of the exhaust gas 30 measured by the temperature measurement unit 41. The drain liquid volumeric flow rate control unit 75 may also be configured to control the volumeric flow rate of the drain liquid 46 that is supplied to the spray unit 38, based on a difference between the temperature of the exhaust gas 30 measured by the temperature measurement unit 41 and a predetermined temperature of the exhaust gas 30. The larger the volumeric flow rate of the drain liquid 46 supplied to the spray unit 38 is, the more the temperature of the exhaust gas 30 is likely to be lowered. As the temperature of the exhaust gas 30 lowers, the physical absorption of sulfur oxides (SOₓ) and the like to the drain liquid 46 is further promoted.

The drain liquid volumeric flow rate control unit 75 may be configured to increase the volumeric flow rate of the drain liquid 46 that is supplied to the spray unit 38, when the temperature of the exhaust gas 30 is higher than the predetermined temperature. Thereby, the physical absorption of sulfur oxides (SOₓ) and the like by the drain liquid 46 is promoted. The drain liquid volumeric flow rate control unit 75 may be configured to reduce the volumeric flow rate of the drain liquid 46 that is supplied to the spray unit 38, when the temperature of the exhaust gas 30 is equal to or lower than the predetermined temperature.

The predetermined temperature of the exhaust gas 30, which is measured by the temperature measurement unit 41, may be 30°C or higher and 95°C or lower. The predetermined temperature of the exhaust gas 30 is, for example, 40°C.

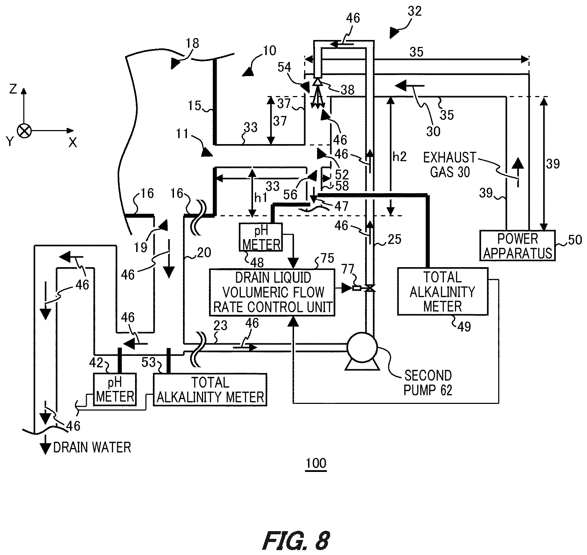

FIG. 8 shows another example of details of the exhaust gas introduction pipe 32 of the exhaust gas treatment apparatus 100 shown in FIG. 5. The exhaust gas treatment apparatus 100 of the present example is different from the exhaust gas treatment apparatus 100 shown in FIG. 7, in that the pH meter 48 and the total alkalinity meter 49 are provided instead of the temperature measurement unit 41.

The exhaust gas treatment apparatus 100 may comprise at least one of the pH meter 48 and the total alkalinity meter 49. The exhaust gas treatment apparatus 100 may comprise one of the pH meter 48 and the total alkalinity meter 49, and may not comprise the other. In the example shown in FIG. 8, the exhaust gas treatment apparatus 100 comprises both the pH meter 48 and the total alkalinity meter 49.

In the present example, the pH meter 48 and the total alkalinity meter 49 are provided to the discharge pipe 58. In the present example, pH and total alkalinity of the treatment liquid 47 are respectively measured by the pH meter 48 and the total alkalinity meter 49. At least one of pH of the treatment liquid 47 measured by the pH meter 48 and the total alkalinity of the treatment liquid 47 measured by the total alkalinity meter 49 is input to the drain liquid volumeric flow rate control unit 75.

The drain liquid volumeric flow rate control unit 75 may also be configured to control the volumeric flow rate of the drain liquid 46 that is supplied to the spray unit 38, based on at least one of pH and total alkalinity of the treatment liquid 47. The more the drain liquid 46 physically absorbs the sulfur oxides (SOₓ) and the like contained in the exhaust gas 30, the more the pH and total alkalinity of the treatment liquid 47 are likely to be lowered.

The drain liquid volumeric flow rate control unit 75 may be configured to increase the volumeric flow rate of the drain liquid 46 that is supplied to the spray unit 38, when at least one of pH and total alkalinity of the treatment liquid 47 is greater than a predetermined value. Thereby, the physical absorption of the sulfur oxides (SOₓ) and the like by the drain liquid 46 is promoted. The drain liquid volumeric flow rate control unit 75 may be configured to reduce the volumeric flow rate of the drain liquid 46 that is supplied to the spray unit 38, when at least one of pH and total alkalinity of the treatment liquid 47 is equal to or smaller than the predetermined value.

The predetermined value of pH of the treatment liquid 47 may be 1.0 or greater and 4.0 or smaller. The predetermined value of pH of the treatment liquid 47 is, for example, 2.5. The predetermined value of the total alkalinity of the treatment liquid 47 may be 0.0mg/L or larger and 5.0mg/L or smaller. The predetermined value of the total alkalinity of the treatment liquid 47 is, for example, 2.5mg/L.

The drain liquid volumeric flow rate control unit 75 may be configured to control the volumeric flow rate of the drain liquid 46 that is supplied to the spray unit 38, based on both pH and total alkalinity of the treatment liquid 47. In this case, as compared to a configuration where the drain liquid volumeric flow rate control unit 75 is configured to control the volumeric flow rate of the drain liquid 46 based on one of pH and total alkalinity of the treatment liquid 47, the drain liquid volumeric flow rate control unit 75 can control the volumeric flow rate of the drain liquid 46 and a timing to change the volumeric flow rate more accurately.

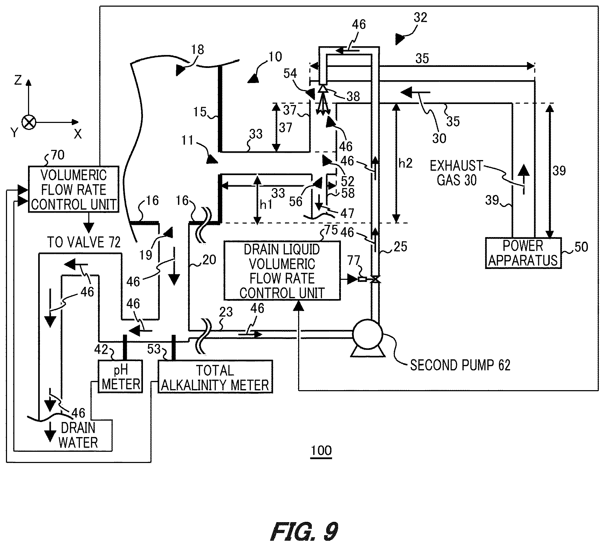

FIG. 9 shows another example of details of the exhaust gas introduction pipe 32 of the exhaust gas treatment apparatus 100 shown in FIG. 5. The exhaust gas treatment apparatus 100 of the present example is different from the exhaust gas treatment apparatus 100 shown in FIG. 7, in that the temperature measurement unit 41 is not provided. In addition, in the exhaust gas treatment apparatus 100 of the present example, the drain liquid volumeric flow rate control unit 75 is configured to control the volumeric flow rate of the drain liquid 46 that is supplied to the spray unit 38, based on the volumeric flow rate of the liquid 40 that is controlled by the volumeric flow rate control unit 70.

An amount of sulfur oxides (SOₓ) that can be chemically absorbed by the liquid 40 of a unit volume is likely to be larger than an amount of sulfur oxides (SOₓ) that can be physically absorbed by the drain liquid 46 of a unit volume. For this reason, the volumeric flow rate of the drain liquid 46 that is controlled by the drain liquid volumeric flow rate control unit 75 may be smaller than the volumeric flow rate of the liquid 40 that is controlled by the volumeric flow rate control unit 70. Thereby, the exhaust gas treatment apparatus 100 can easily improve the treatment efficiency of sulfur oxides (SOₓ) as a whole of the exhaust gas treatment apparatus 100 by the liquid 40 and the drain liquid 46.

The drain liquid volumeric flow rate control unit 75 may also be configured to control the volumeric flow rate of the drain liquid 46 that is supplied to the spray unit 38 to a predetermined ratio for the volumeric flow rate of the liquid 40 that is controlled by the volumeric flow rate control unit 70. The drain liquid volumeric flow rate control unit 75 may be configured to control the volumeric flow rate of the drain liquid 46 to 1/10 or greater and 5/10 or smaller of the volumeric flow rate of the liquid 40. The drain liquid volumeric flow rate control unit 75 controls, for example, the volumeric flow rate of the drain liquid 46 to 1/5 of the volumeric flow rate of the liquid 40.

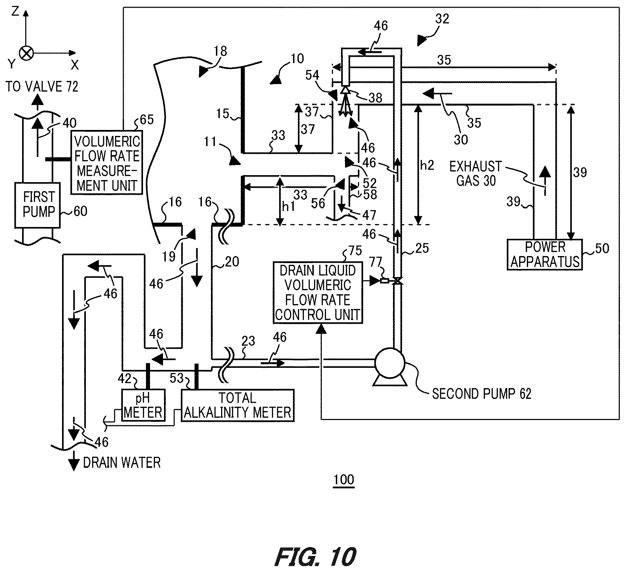

FIG. 10 shows another example of details of the exhaust gas introduction pipe 32 of the exhaust gas treatment apparatus 100 shown in FIG. 5. The exhaust gas treatment apparatus 100 of the present example is different from the exhaust gas treatment apparatus 100 shown in FIG. 7, in that a volumeric flow rate measurement unit 65 is further provided. The exhaust gas treatment apparatus 100 of the present example is different from the exhaust gas treatment apparatus 100 shown in FIG. 7, in that the temperature measurement unit 41 is not provided.

The volumeric flow rate measurement unit 65 is configured to measure the volumeric flow rate of the liquid 40 that is supplied to the reaction tower 10. The volumeric flow rate measurement unit 65 may be configured to measure the volumeric flow rate of the liquid 40 between the first pump 60 and the valve 72 on a flow path of the liquid 40. In the present example, the drain liquid volumeric flow rate control unit 75 is configured to control the volumeric flow rate of the drain liquid 46 that is supplied to the spray unit 38, based on the volumeric flow rate of the liquid 40 that is measured by the volumeric flow rate measurement unit 65.

The drain liquid volumeric flow rate control unit 75 may also be configured to control the volumeric flow rate of the drain liquid 46 that is supplied to the spray unit 38 to a predetermined ratio for the volumeric flow rate of the liquid 40 that is measured by the volumeric flow rate measurement unit 65. The drain liquid volumeric flow rate control unit 75 may be configured to control the volumeric flow rate of the drain liquid 46 to 1/10 or greater and 5/10 or smaller of the volumeric flow rate of the liquid 40. The drain liquid volumeric flow rate control unit 75 controls, for example, the volumeric flow rate of the drain liquid 46 to 1/5 of the volumeric flow rate of the liquid 40.

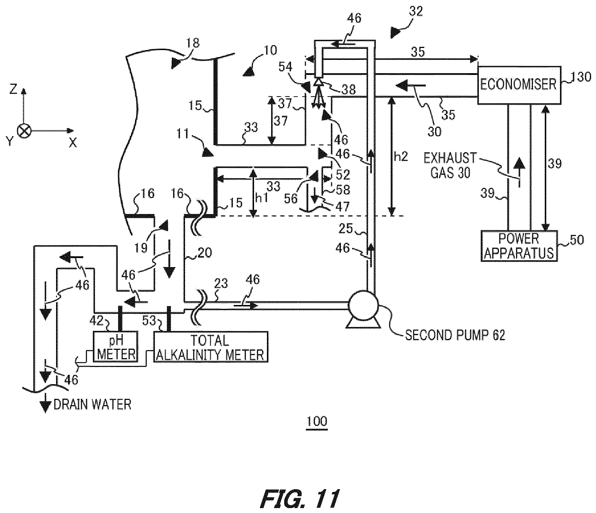

FIG. 11 shows another example of details of the exhaust gas introduction pipe 32 of the exhaust gas treatment apparatus 100 shown in FIG. 5. The exhaust gas treatment apparatus 100 of the present example is different from the example shown in FIG. 7, in that the temperature measurement unit 41, the drain liquid volumeric flow rate control unit 75 and the valve 77 are not provided. In addition, the exhaust gas treatment apparatus 100 of the present example is different from the example shown in FIG. 7, in that an economiser 130 is further provided. In the present example, the economiser 130 is provided to the exhaust gas introduction pipe 32. The economiser 130 may be provided over the second part 35 and the leading part 39.

The economiser 130 of the present example is configured to cool the exhaust gas 30 discharged from the power apparatus 50. In the present example, the spray unit 38 is configured to spray the drain liquid 46 to the exhaust gas 30 cooled by the economiser 130. As the temperature of the exhaust gas 30 becomes lower, the physical absorption of sulfur oxides (SOₓ) and the like by the drain liquid 46 is further promoted. In the present example, the drain liquid 46 is sprayed to the exhaust gas 30 cooled by the economiser 130. Therefore, as compared to the configuration where the drain liquid 46 is sprayed to the exhaust gas 30 not cooled by the economiser 130, the physical absorption of sulfur oxides (SOₓ) and the like by the drain liquid 46 is further promoted. For this reason, the exhaust gas treatment apparatus 100 can reduce the amount of sulfur oxides (SOₓ) that are chemically absorbed by the liquid 40 inside the reaction tower 10. Accordingly, the exhaust gas treatment apparatus 100 can reduce the volumeric flow rate of the liquid 40 that is supplied into the reaction tower 10.

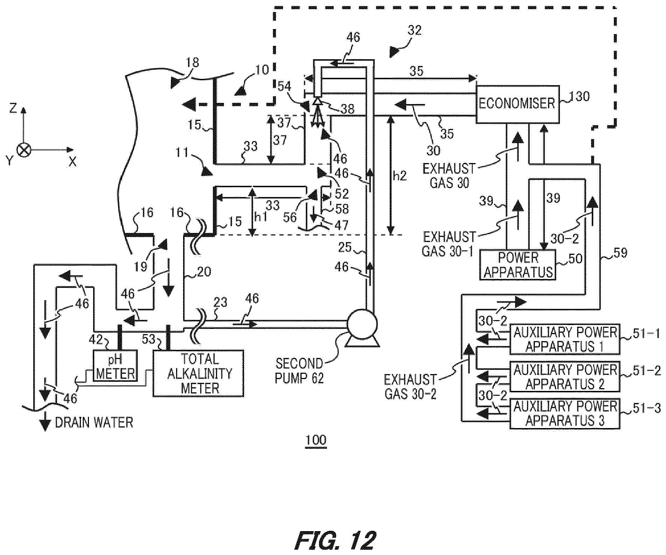

FIG. 12 shows another example of details of the exhaust gas introduction pipe 32 of the exhaust gas treatment apparatus 100 shown in FIG. 5. The exhaust gas treatment apparatus 100 of the present example is different from the example shown in FIG. 11, in that an auxiliary power apparatus 51 is further provided. The exhaust gas treatment apparatus 100 may comprise a plurality of auxiliary power apparatuses 51. In the present example, the exhaust gas treatment apparatus 100 comprises three auxiliary power apparatuses 51 (an auxiliary power apparatus 51-1, an auxiliary power apparatus 51-2 and an auxiliary power apparatus 51-3).

The exhaust gas 30 may be discharged from at least one of the power apparatus 50 and the auxiliary power apparatus 51. In the present example, the exhaust gas 30 is discharged from both the power apparatus 50 and the auxiliary power apparatus 51.

In the present example, the exhaust gas 30 discharged from the power apparatus 50 is referred to as 'exhaust gas 30-1', and the exhaust gas 30 discharged from the auxiliary power apparatus 51 is referred to as 'exhaust gas 30-2'. The exhaust gas introduction pipe 32 of the present example further has a leading part 59 through which the exhaust gas 30-2 passes. In the present example, the leading part 59 is connected to the leading part 39. The exhaust gas 30-1 and the exhaust gas 30-2 are mixed to become the exhaust gas 30 in the leading part 39.

In a case where the exhaust gas treatment apparatus 100 is a scrubber for a ship, the power apparatus 50 and the auxiliary power apparatus 51 may be a main engine and an auxiliary engine of the ship, respectively. In the present example, the exhaust gas 30-2 discharged from the auxiliary power apparatus 51 is mixed with the exhaust gas 30-1 discharged from the power apparatus 50 in the leading part 39. The exhaust gas 30-2 may also be directly introduced into the reaction tower 10. In FIG. 12, a path when the exhaust gas 30-2 is directly introduced into the reaction tower 10 is shown with the thick broken arrow.

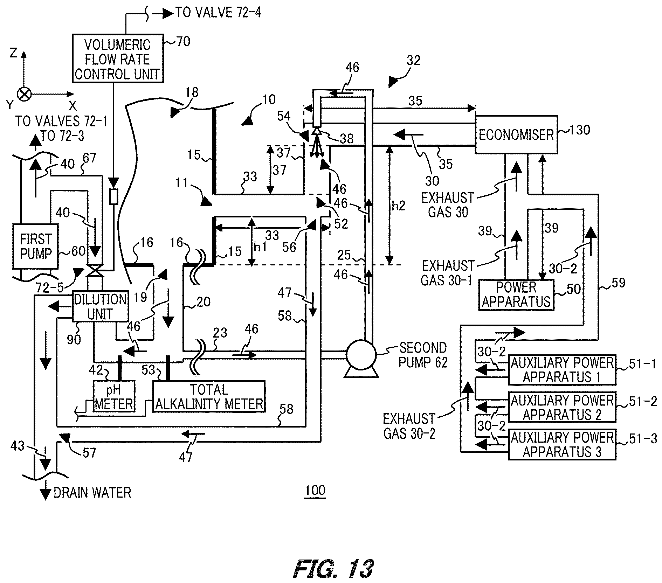

FIG. 13 shows another example of the exhaust gas treatment apparatus 100 according to one embodiment of the present invention. The exhaust gas treatment apparatus 100 of the present example is different from the exhaust gas treatment apparatus 100 shown in FIG. 12, in that a dilution unit 90, a pipe 67 and a valve 72-5 are further provided. The dilution unit 90 is configured to dilute the drain liquid 46 with at least a part of the liquid 40. In the present example, the dilution unit 90 is provided to the drain water pipe 20. In the present example, one end of the pipe 67 is connected to the dilution unit 90. The valve 72-5 may be provided to the pipe 67.

In the present example, a part of the liquid 40 that is supplied from the first pump 60 passes through the pipe 67 and is supplied to the dilution unit 90. In the present example, the dilution unit 90 is configured to dilute the drain liquid 46 by mixing the drain liquid 46 passing through the drain water pipe 20 from the reaction tower 10 and introduced into the dilution unit 90 with the part of the liquid 40. The other part of the liquid 40 that is supplied from the first pump 60 is supplied to the valve 72 (refer to FIG. 5). In the present example, the drain water 43 is a liquid in which the liquid 40, the drain liquid 46 and the treatment liquid 47 are mixed.

In the present example, the volumeric flow rate control unit 70 is configured to control the volumeric flow rate of the liquid 40, which is supplied to the trunk tube 12-1, the trunk tube 12-2 and the trunk tube 12-3, respectively by the valve 72-1, the valve 72-2 and the valve 72-3, is configured to control the volumeric flow rate of the liquid 44, which is supplied to the first ejection unit 14, by the valve 72-4, and is configured to control the volumeric flow rate of the liquid 40, which passes through the pipe 67, by the valve 72-5. The volumeric flow rate control unit 70 may also be configured to control the volumeric flow rate of the liquid 40 that is supplied to the dilution unit 90, based on at least one of pH of the drain liquid 46 measured by the pH meter 42 and the total alkalinity of the drain liquid 46 measured by the total alkalinity meter 53.

The volumeric flow rate control unit 70 may be configured to increase the volumeric flow rate of the liquid 40 that is supplied to the dilution unit 90, when at least one of pH of the drain liquid 46 measured by the pH meter 42 and the total alkalinity of the drain liquid 46 measured by the total alkalinity meter 53 is smaller than a predetermined value. The volumeric flow rate control unit 70 may be configured to reduce the volumeric flow rate of the liquid 40 that is supplied to the dilution unit 90, when at least one of the pH of the drain liquid 46 and the total alkalinity of the drain liquid 46 is equal to or greater than the predetermined value. The predetermined value of pH of the drain liquid 46 is, for example, 3.0. The predetermined value of the total alkalinity of the drain liquid 46 is, for example, 4.0mg/L.

In a case where the exhaust gas treatment apparatus 100 is a scrubber for a ship and at least one of pH and total alkalinity of the drain liquid 46 is smaller than the predetermined value, a member provided on a path, along which the drain water 43 is discharged from the drain water pipe 20 to an outside of the ship, and in contact with the drain water 43 is likely to be corroded. The member is, for example, a distance piece. In a case where the distance piece is formed of the same metal material (for example, iron (Fe)) as an outer wall of the ship, corrosion resistance of the distance piece is lower than corrosion resistance of a member formed of stainless steel or the like and forming an inner wall of the gas treatment part 18.

In the present example, when at least one of pH and total alkalinity of the drain liquid 46 is smaller than the predetermined value, since the volumeric flow rate control unit 70 increases the volumeric flow rate of the liquid 40 that is supplied to the dilution unit 90, it is easy to adjust at least one of pH and total alkalinity of the drain liquid 46 to the predetermined value or greater. For this reason, the exhaust gas treatment apparatus 100 of the present example can easily suppress corrosion of the member in contact with the drain liquid 46.

In a case where the exhaust gas treatment apparatus 100 is a scrubber for a ship, the drain water 43 is discharged to an outside of the ship. As for pH and the like of the drain water 43 that is discharged from the scrubber for a ship to the outside of the ship, predetermined regulation values are prescribed. For example, when a ship sails in a sea area for which the regulation on drainage of a ship (VGP (Vessel General Permit) regulation) announced by the US Ministry of the Environment is prescribed, pH of the drain water 43 of the ship should be 6.0 or larger. In the drain water 43 in the exhaust gas treatment apparatus 100 of the present example, the drain liquid 46 and the treatment liquid 47 are diluted with the liquid 40. Therefore, pH of the drain water 43 can easily meet the predetermined regulation value.

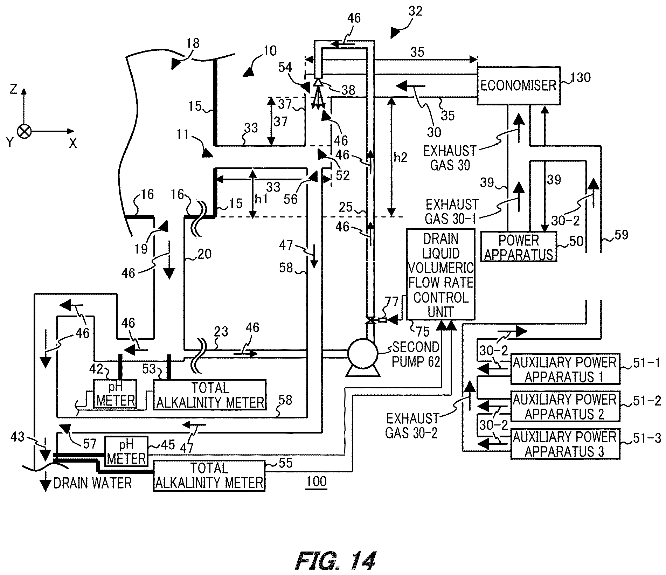

FIG. 14 shows another example of details of the exhaust gas introduction pipe 32 of the exhaust gas treatment apparatus 100 shown in FIG. 5. In the exhaust gas treatment apparatus 100 of the present example, the discharge pipe 58 is connected to the drain water pipe 20. In addition, the exhaust gas treatment apparatus 100 of the present example further comprises at least one of the pH meter 45 and the total alkalinity meter 55, the drain liquid volumeric flow rate control unit 75 and the valve 77. The exhaust gas treatment apparatus 100 of the present example is different from the exhaust gas treatment apparatus 100 shown in FIG. 12, in terms of these matters.

In the present example, an inside of the discharge pipe 58 and an inside of the drain water pipe 20 are configured to communicate with each other by a treatment liquid outlet 57. In the present example, the treatment liquid 47 passes through the drain liquid outlet 56 and is discharged to the discharge pipe 58. In the present example, the treatment liquid 47 discharged to the discharge pipe 58 passes through the treatment liquid outlet 57 and is discharged to the drain water pipe 20. In the present example, the treatment liquid 47 discharged to the drain water pipe 20 is mixed with the drain liquid 46 discharged from the gas treatment part 18 of the reaction tower 10, to become the drain water 43.

The treatment liquid outlet 57 may be arranged farther downstream than the recovery pipe 23, on the flow path of the drain liquid 46 in the drain water pipe 20. The treatment liquid outlet 57 is arranged farther downstream than the recovery pipe 23, on the flow path of the drain liquid 46, so that it becomes difficult for the treatment liquid 47 passing through the discharge pipe 58 to be recovered from the recovery pipe 23. For this reason, it becomes difficult for the treatment liquid 47 to be sprayed from the spray unit 38.

When the treatment liquid 47 physically absorbing the exhaust gas 30 inside the exhaust gas introduction pipe 32 is recovered from the recovery pipe 23, the physical absorption efficiency of the exhaust gas 30 is likely to be lowered. In the exhaust gas treatment apparatus 100 of the present example, since the treatment liquid outlet 57 is arranged farther downstream than the recovery pipe 23, as described above. Therefore, the exhaust gas treatment apparatus 100 of the present example can easily suppress the lowering in physical absorption efficiency of the exhaust gas 30.

The drain liquid outlet 56 may also be provided below the connecting part 37. The drain liquid outlet 56 may also be provided on the bottom surface of the first part 33. The drain liquid outlet 56 is provided below the connecting part 37, so that it becomes difficult for the treatment liquid 47 physically absorbing at least a part of sulfur oxides (SOₓ) and the like contained in the exhaust gas 30 to stay inside the exhaust gas introduction pipe 32.

The exhaust gas treatment apparatus 100 may comprise at least one of the pH meter 45 and the total alkalinity meter 55. The exhaust gas treatment apparatus 100 may comprise one of the pH meter 45 and the total alkalinity meter 55, and may not comprise the other. In the example shown in FIG. 14, the exhaust gas treatment apparatus 100 comprises both the pH meter 45 and the total alkalinity meter 55.

In the present example, pH and total alkalinity of the drain water 43 are respectively measured by the pH meter 45 and the total alkalinity meter 55. In the present example, the pH meter 45 and the total alkalinity meter 55 are provided in positions of the drain water pipe 20, through which the drain water 43 passes. At least one of pH of the drain water 43 measured by the pH meter 45 and the total alkalinity of the drain water 43 measured by the total alkalinity meter 55 is input to the drain liquid volumeric flow rate control unit 75.

The drain liquid volumeric flow rate control unit 75 may be configured to control the volumeric flow rate of the drain liquid 46 that is supplied to the spray unit 38, based on at least one of pH and total alkalinity of the drain water 43. The more the drain liquid 46 chemically absorbs and physically absorbs the sulfur oxides (SOₓ) contained in the exhaust gas 30, the more the pH and total alkalinity of the drain water 43 are likely to be lowered.

The drain liquid volumeric flow rate control unit 75 may be configured to increase the volumeric flow rate of the drain liquid 46 that is supplied to the spray unit 38, when at least one of pH and total alkalinity of the drain water 43 is greater than a predetermined value. Thereby, the physical absorption of the sulfur oxides (SOₓ) and the like by the drain liquid 46 is promoted. The drain liquid volumeric flow rate control unit 75 may be configured to reduce the volumeric flow rate of the drain liquid 46 that is supplied to the spray unit 38, when at least one of pH and total alkalinity of the drain water 43 is equal to or smaller than the predetermined value. The predetermined value of pH of the drain water 43 may be 1.0 or greater and 5.0 or smaller, or 1.0 or greater and 4.0 or smaller. The predetermined value of pH of the drain water 43 is, for example, 3.0. The predetermined value of the total alkalinity of the treatment liquid 47 may be 0.0mg/L (liter) or larger and 5.0mg/L (liter) or smaller. The predetermined value of the total alkalinity of the treatment liquid 47 is, for example, 2.5mg/L (liter).

The drain liquid volumeric flow rate control unit 75 may be configured to control the volumeric flow rate of the drain liquid 46 that is supplied to the spray unit 38, based on both pH and total alkalinity of the drain water 43. In this case, as compared to a configuration where the drain liquid volumeric flow rate control unit 75 is configured to control the volumeric flow rate of the drain liquid 46 based on one of pH and total alkalinity of the drain water 43, the drain liquid volumeric flow rate control unit 75 can control the volumeric flow rate of the drain liquid 46 and a timing to change the volumeric flow rate more accurately.

Also in the present example, similar to the example shown in FIG. 13, the exhaust gas treatment apparatus 100 may further comprises a dilution unit 90, a pipe 67 and a valve 72-5. In a case where the exhaust gas treatment apparatus 100 of the present example further comprises the dilution unit 90, the pipe 67 and the valve 72-5, the volumeric flow rate control unit 70 may also be configured to control the volumeric flow rate of the liquid 40 that is supplied to the dilution unit 90, based on at least one of pH of the drain water 43 measured by the pH meter 45 and the total alkalinity of the drain water 43 measured by the total alkalinity meter 55.

The volumeric flow rate control unit 70 may be configured to increase the volumeric flow rate of the liquid 40 that is supplied to the dilution unit 90, when at least one of pH of the drain water 43 measured by the pH meter 45 and the total alkalinity of the drain water 43 measured by the total alkalinity meter 55 is smaller than a predetermined value. The volumeric flow rate control unit 70 may be configured to reduce the volumeric flow rate of the liquid 40 that is supplied to the dilution unit 90, when at least one of the pH of the drain water 43 and the total alkalinity of the drain water 43 is equal to or greater than the predetermined value. The predetermined value may be the same as the predetermined value described with reference to FIG. 13.

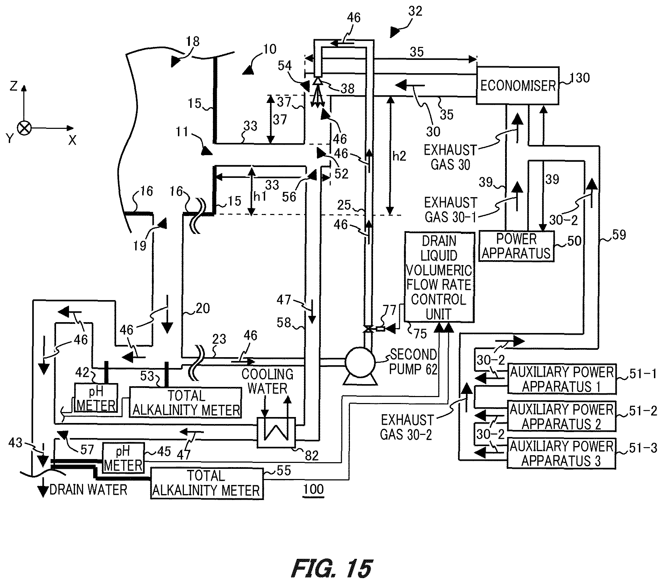

FIG. 15 shows another example of details of the exhaust gas introduction pipe 32 of the exhaust gas treatment apparatus 100 shown in FIG. 5. The exhaust gas treatment apparatus 100 of the present example is different from the example shown in FIG. 14, in that a second heat exchanger 82 is further provided. The second heat exchanger 82 is configured to recover heat of the treatment liquid 47 discharged from the exhaust gas introduction pipe 32 to the discharge pipe 58. In the present example, the treatment liquid 47 cooled by the second heat exchanger 82 passes through the treatment liquid outlet 57 and is discharged to the drain water pipe 20.

The heat of the treatment liquid 47 recovered by the second heat exchanger 82 may be reused. In a case where the exhaust gas treatment apparatus 100 is a scrubber for a ship, the heat of the treatment liquid 47 may be reused for an exhaust heat utilization device and the like provided on the ship. The exhaust heat utilization device is, for example, an air conditioner or the like. Thereby, the consumption energy of the ship is reduced.

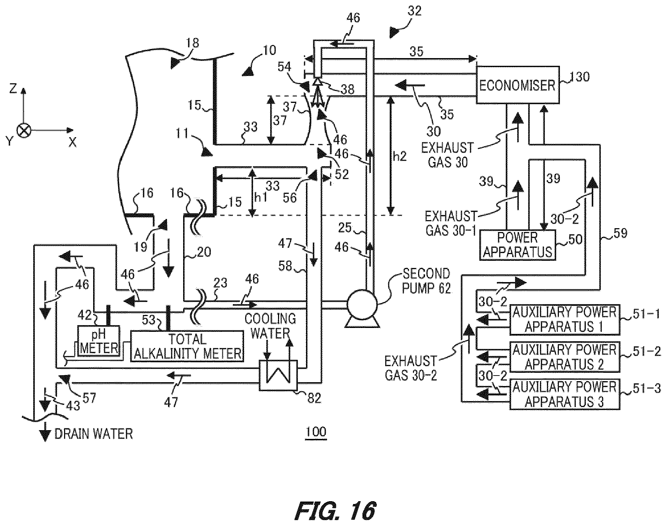

FIG. 16 shows another example of details of the exhaust gas introduction pipe 32 of the exhaust gas treatment apparatus 100 shown in FIG. 5. In the present example, a shape of the connecting part 37 is different from the example shown in FIG. 15. The exhaust gas treatment apparatus 100 of the present example is not provided with at least one of the pH meter 45 and the total alkalinity meter 55, the drain liquid volumeric flow rate control unit 75 and the valve 77. The exhaust gas treatment apparatus 100 of the present example is different from the example shown in FIG. 15, in terms of these matters.

In the present example, a cross-sectional area of a central portion of the connecting part 37 in the advancing direction of the exhaust gas 30 is smaller than a cross-sectional area of one end 52 of the connecting part 37 and is smaller than a cross-sectional area of the other end 54 of the connecting part 37, in the XY plane. The connecting part 37 of the present example has such a shape that a central portion in the Z-axis direction in the XZ cross-section is narrowed. The connecting part 37 may have a curved shape or a tapered shape from one end 52 to the central portion and from the other end 54 to the central portion in the Z-axis direction in a cross-section (XZ cross section, in FIG. 16) parallel to the Z-axis.

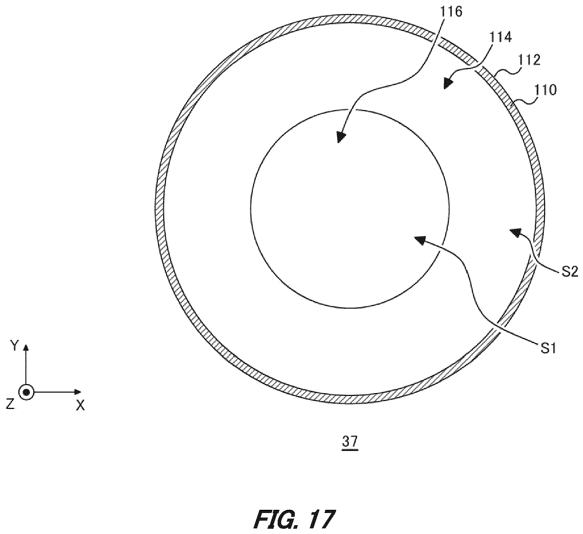

FIG. 17 shows an example of a shape of the connecting part 37 shown in FIG. 16, as seen from above. FIG. 17 shows an example where the connecting part 37 is seen from a position of the other end 54 in the Z-axis direction toward one end 52. The exhaust gas introduction pipe 32 has a pipe body 110 and a gas passage part 116. The gas passage part 116 is provided inside the pipe body 110. An outer surface 112 and an inner surface 114 are an outer surface and an inner surface of the pipe body 110, respectively. The inner surface 114 is a surface in contact with the gas passage part 116.

In the present example, a direction in which the exhaust gas 30 passes is the Z-axis direction and is a direction facing from the other end 54 toward the one end 52. In the present example, a plane orthogonal to the direction in which the exhaust gas 30 passes is the XY plane. An area in the XY plane of the gas passage part 116 between the one end 52 and the other end 54 of the connecting part is referred to as 'area S1'. The area S1 may also be a cross-sectional area in the XY plane at the narrowest portion of the connecting part 37 in the Z-axis direction. An area in the XY plane of the gas passage part 116 at the one end 52 and the other end 54 is referred to as 'area S2'.

In the present example, the area S1 is smaller than the area S2. A pressure of the exhaust gas 30 passing through a portion of the area S2 of the connecting part 37 is likely to be greater than a pressure of the exhaust gas 30 passing through a portion of the area S1. The higher the pressure of the exhaust gas 30 is, the physical absorption of sulfur oxides (SOₓ) and the like by the drain liquid 46 tends to be further promoted. In the exhaust gas treatment apparatus 100 of the present example, the spray unit 38 is configured to spray the drain liquid 46 to the connecting part 37. For this reason, in the exhaust gas treatment apparatus 100 of the present example, the physical absorption of the harmful substances such as sulfur oxides (SOₓ) contained in the exhaust gas 30 is promoted in the connecting part 37.

Note that, when a velocity of the drain liquid 46 that is sprayed to the portion of the area S1 of the connecting part 37 is equal to or greater than a predetermined value, the portion of the area S1 may have an ejector configured to suck the exhaust gas 30. In a case where the portion of the area S1 has a function of the ejector, the pressure loss of the exhaust gas 30 is likely to be reduced.

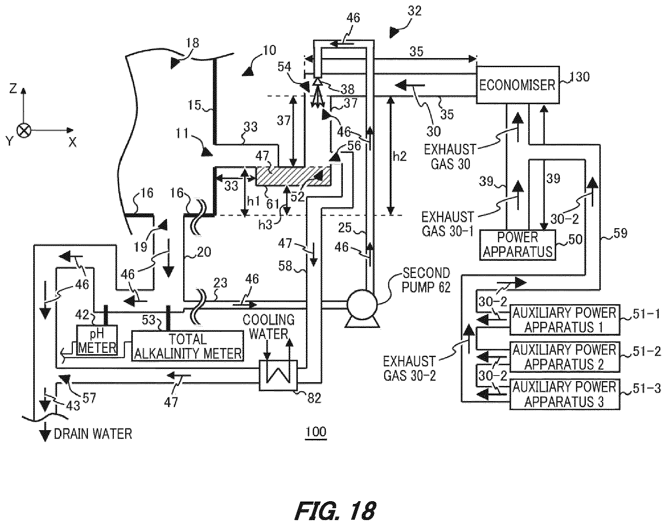

FIG. 18 shows another example of details of the exhaust gas introduction pipe 32 of the exhaust gas treatment apparatus 100 shown in FIG. 5. In the exhaust gas treatment apparatus 100 of the present example, the exhaust gas introduction pipe 32 further has a third part 61. The exhaust gas treatment apparatus 100 of the present example is not provided with at least one of the pH meter 45 and the total alkalinity meter 55, the drain liquid volumeric flow rate control unit 75 and the valve 77. The exhaust gas treatment apparatus 100 of the present example is different from the example shown in FIG. 15, in terms of these matters.

The third part 61 of the present example is provided at a predetermined third height. In the present example, the third height is a third height h3 from the bottom surface 16 of the reaction tower 10 to a bottom surface of the third part 61. The third height h3 may be lower than the first height h1 and the second height h2.

In the present example, the third part 61 is configured to stay the treatment liquid 47. In the present example, since the third part 61 is provided at the third height h3 lower than the first height h1 and the second height h2, the treatment liquid 47 physically absorbing the sulfur oxides (SOₓ) and the like while passing through the connecting part 37 is likely to stay in the third part 61. In FIG. 18, the treatment liquid 47 staying in the third part 61 is hatched.

When the treatment liquid 47 stays in the third part 61, the exhaust gas 30 passing through the exhaust gas introduction pipe 32 is likely to contact the treatment liquid 47 in the third part 61. For this reason, the sulfur oxides (SOₓ) and the like contained in the exhaust gas 30 are likely to be further physically absorbed to the treatment liquid 47.

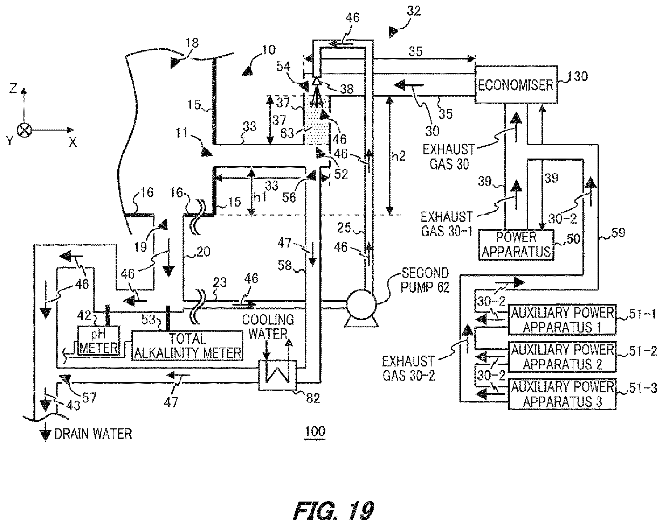

FIG. 19 shows another example of details of the exhaust gas introduction pipe 32 of the exhaust gas treatment apparatus 100 shown in FIG. 5. In the exhaust gas treatment apparatus 100 of the present example, the exhaust gas introduction pipe 32 is provided therein with a filling material 63 for enlarging a surface area of the drain liquid 46. In addition, the exhaust gas treatment apparatus 100 of the present example is not provided with at least one of the pH meter 45 and the total alkalinity meter 55, the drain liquid volumeric flow rate control unit 75 and the valve 77. The exhaust gas treatment apparatus 100 of the present example is different from the example shown in FIG. 15, in terms of these matters. In the present example, the filling material 63 is provided inside the connecting part 37.

The filling material 63 enlarges the surface area of the drain liquid 46 by atomizing the drain liquid 46. The filling material 63 may be corrosion-resistant stainless steel such as SUS329J4L. The filling material 63 may be at least one of a Raschig ring, a Pall ring, a cloth ring and an interlock saddle, for example. The filling material 63 may also be an aggregate of fine particles. The filling material 63 may also be an organic compound such as cellulose ((C₆H₁₀O₅)ₙ) or may be a polymer such as polyethylene or polypropylene.

In the exhaust gas treatment apparatus 100 of the present example, since the filling material 63 is provided inside the exhaust gas introduction pipe 32, the drain liquid 46 is likely to be absorbed to the filling material 63 and to stay inside the exhaust gas introduction pipe 32, and the surface area of the drain liquid 46 is enlarged. In the present example, the drain liquid 46 is likely to stay in the connecting part 37. When the drain liquid 46 stays in the connecting part 37 and the surface area of the drain liquid 46 is enlarged, the exhaust gas 30 is likely to contact the drain liquid 46 in the connecting part 37 and the surface area of the drain liquid 46 in contact with the exhaust gas 30 is likely to increase. For this reason, the sulfur oxides (SOₓ) and the like contained in the exhaust gas 30 are likely to be further physically absorbed to the drain liquid 46.

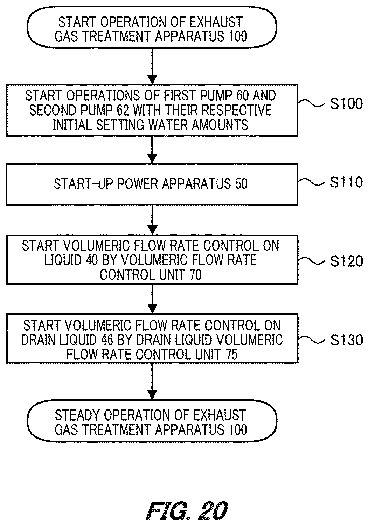

FIG. 20 shows an example of a control flow of the exhaust gas treatment apparatus 100 according to one embodiment of the present invention. In step S100, the exhaust gas treatment apparatus 100 starts operations of the first pump 60 (refer to FIG. 1) and the second pump 62 (refer to FIG. 1) with their respective initial setting water amounts.

In step S110, the exhaust gas treatment apparatus 100 starts up the power apparatus 50 (refer to FIG. 1). In step S110, the exhaust gas treatment apparatus 100 may start up the power apparatus 50 and the auxiliary power apparatus 51 (refer to FIG. 12). Note that, step S110 may be executed after step S100 or may be executed at the same time as step S100.

In step S120, the exhaust gas treatment apparatus 100 starts volumeric flow rate control on the liquid 40 by the volumeric flow rate control unit 70 (refer to FIG. 1). In step S130, the exhaust gas treatment apparatus 100 starts volumeric flow rate control on the drain liquid 46 by the drain liquid volumeric flow rate control unit 75 (refer to FIG. 7). By the above steps, the exhaust gas treatment apparatus 100 reaches a steady operation. In the below, the volumeric flow rate controls on the liquid 40 and the drain liquid 46 are described for a case where the exhaust gas treatment apparatus 100 of the present example is a scrubber for a ship.

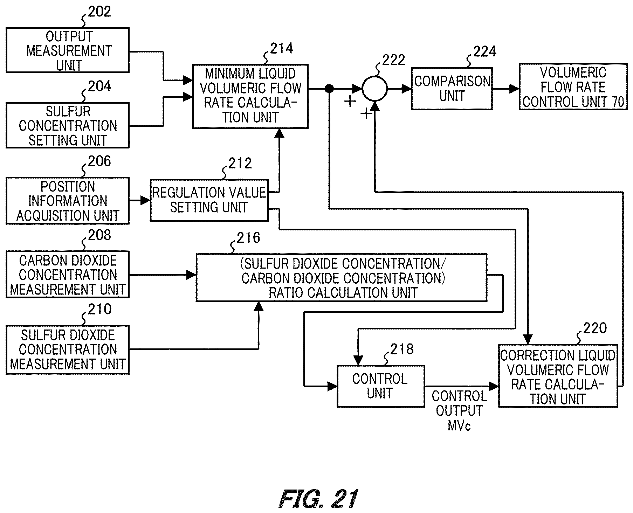

FIG. 21 is a block diagram showing an example of details of the volumeric flow rate control on the liquid 40 in step S120 of FIG. 20. An output measurement unit 202 is configured to measure an output of the power apparatus 50. The output measurement unit 202 may also be configured to measure a sum of an output of the power apparatus 50 and an output of the auxiliary power apparatus 51. The power apparatus 50 may be configured to generate the exhaust gas 30 by burning heavy oil. A sulfur concentration setting unit 204 is configured to set a concentration of sulfur (S) in fuel that is used. The setting value may be 0.0 wt% or larger and 5.0 wt% or smaller. The setting value is, for example, 3.5 wt%. The setting value may also be set by a user of the exhaust gas treatment apparatus 100.

A position information acquisition unit 206 is configured to acquire a position on the sea of the ship on which the exhaust gas treatment apparatus 100 is mounted. The position information acquisition unit 206 is, for example, a global positioning system (GPS). A regulation value setting unit 212 is configured to set a regulation value of the exhaust gas 30, according to the position on the sea acquired by the position information acquisition unit 206. The regulation value is an upper limit value of the concentration of sulfur (S) in the fuel that can be used in the sea area, for example. The regulation value is, for example, 0.5 wt%, and is, for example, 0.1 wt%, in the stricter sea area. The regulation value may also be set by the user of the exhaust gas treatment apparatus 100.

A minimum liquid volumeric flow rate calculation unit 214 is configured to calculate a volumeric flow rate of the liquid 40, based on the output of the power apparatus 50 measured by the output measurement unit 202, the setting value of the concentration of sulfur (S) set by the sulfur concentration setting unit 204, and the regulation value of the concentration of sulfur (S) in the fuel that is used, which is set by the regulation value setting unit 212. The volumeric flow rate of the liquid 40 is a minimum volumeric flow rate of the liquid 40 required for chemical absorption of sulfur oxides (SOₓ) and the like contained in the exhaust gas 30.

A carbon dioxide concentration measurement unit 208 is configured to measure a concentration of carbon dioxide (CO₂) contained in the purified gas 34 (refer to FIG. 5). A sulfur dioxide concentration measurement unit 210 is configured to measure a concentration of sulfur dioxide (SO₂) contained in the purified gas 34 (refer to FIG. 5). The carbon dioxide concentration measurement unit 208 and the sulfur dioxide concentration measurement unit 210 may be included in the concentration measurement unit 73 (refer to FIG. 5).

A (sulfur dioxide concentration/carbon dioxide concentration) ratio calculation unit 216 is configured to divide the concentration of sulfur dioxide (SO₂) in the purified gas 34 measured by the sulfur dioxide concentration measurement unit 210 by the concentration of carbon dioxide (CO₂) in the purified gas 34 measured by the carbon dioxide concentration measurement unit 208.

A control unit 218 may be configured to control the volumeric flow rate of at least one of the liquid 40, which is supplied to at least one of the first ejection unit 14 and the second ejection unit 84, or the liquid 44, based on the concentration of sulfur dioxide and the concentration of carbon dioxide in the purified gas 34. In the present example, the control unit 218 is configured to output a control output MVc, based on the (sulfur dioxide concentration/carbon dioxide concentration) ratio calculated by the (sulfur dioxide concentration/carbon dioxide concentration) ratio calculation unit 216 and the regulation value of the concentration of sulfur (S) set by the regulation value setting unit 212. The control unit 218 may also be configured to output the control output MVc by PID control.

A correction liquid volumeric flow rate calculation unit 220 is configured to calculate a correction volumeric flow rate of the liquid 40, based on the volumeric flow rate of the liquid 40 calculated by the minimum liquid volumeric flow rate calculation unit 214 and the control output MVc output by the control unit 218. An addition unit 222 is configured to add the correction volumeric flow rate of the liquid 40 calculated by the correction liquid volumeric flow rate calculation unit 220 to the volumeric flow rate of the liquid 40 calculated by the minimum liquid volumeric flow rate calculation unit 214. The addition unit 222 is configured to output, to a comparison unit 224, a volumeric flow rate of the liquid 40 to which the correction volumeric flow rate has been added. The volumeric flow rate of the liquid 40 to which the correction volumeric flow rate has been added is referred to as a liquid volumeric flow rate Mc. The liquid volumeric flow rate Mc is controlled by the volumeric flow rate control unit 70, as described later.

The predetermined upper limit value and lower limit value of the volumeric flow rate of the liquid 40 are respectively referred to as 'upper limit volumeric flow rate Mc1' and 'lower limit volumeric flow rate Mc2'. The upper limit volumeric flow rate Mc1 and the lower limit volumeric flow rate Mc2 may be respectively an upper limit value and a lower limit value of the volumeric flow rate of the liquid 40 that can be controlled by the volumeric flow rate control unit 70 (refer to FIG. 5).

The comparison unit 224 is configured to compare the liquid volumeric flow rate Mc and the upper limit volumeric flow rate Mc1. The comparison unit 224 is also configured to compare the liquid volumeric flow rate Mc and the lower limit volumeric flow rate Mc2. When the liquid volumeric flow rate Mc is equal to or smaller than the upper limit volumeric flow rate Mc1 and is equal to or larger than the lower limit volumeric flow rate Mc2 (Mc2≤Mc≤Mc1), the comparison unit 224 outputs the liquid volumeric flow rate Mc to the volumeric flow rate control unit 70. When the liquid volumeric flow rate Mc is larger than the upper limit volumeric flow rate Mc1 (Mc> Mc1), the comparison unit 224 outputs the upper limit volumeric flow rate Mc1 to the volumeric flow rate control unit 70. When the liquid volumeric flow rate Mc is smaller than the lower limit volumeric flow rate Mc2 (Mc< Mc2), the comparison unit 224 outputs the lower limit volumeric flow rate Mc2 to the volumeric flow rate control unit 70. The volumeric flow rate control unit 70 is configured to control the volumeric flow rate of the liquid 40 so that the volumeric flow rate of the liquid 40 to be supplied to the reaction tower 10 becomes the volumeric flow rate of the liquid 40 output by the comparison unit 224. Note that, the upper limit volumeric flow rate Mc1 and the lower limit volumeric flow rate Mc2 may be stored in the comparison unit 224.

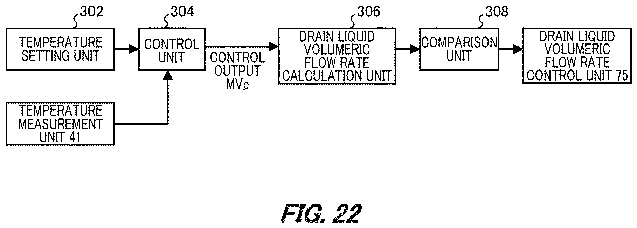

FIG. 22 is a block diagram showing an example of details of a volumeric flow rate control on the drain liquid 46 in step S130 of FIG. 20. FIG. 22 shows an example of the volumeric flow rate control on the drain liquid 46 in the exhaust gas treatment apparatus 100 shown in FIG. 7. In the present example, the drain liquid volumeric flow rate control unit 75 is configured to control the volumeric flow rate of the drain liquid 46 that is supplied to the spray unit 38, based on the temperature of the exhaust gas 30 measured by the temperature measurement unit 41.

The temperature measurement unit 41 (refer to FIG. 7) is configured to measure a temperature of the exhaust gas 30. In the present example, the temperature measurement unit 41 is configured to measure a temperature of the exhaust gas 30 in which at least a part of the harmful substances such as sulfur oxides (SOₓ) contained in the exhaust gas 30 has been treated (physically absorbed) by the drain liquid 46 sprayed from the spray unit 38.

A temperature setting unit 302 is configured to set a target temperature Tt of the exhaust gas 30 treated (physically absorbed) by the drain liquid 46. The target temperature Tt may also be set by the user of the exhaust gas treatment apparatus 100. The target temperature Tt of the exhaust gas 30 may be 30°C or higher and 95°C or lower. The target temperature Tt of the exhaust gas 30 is, for example, 40°C.

A control unit 304 is configured to output a control output MVp, based on the temperature of the exhaust gas 30 measured by the temperature measurement unit 41 and the target temperature Tt set by the temperature setting unit 302. The control unit 304 may also be configured to output the control output MVp by PID control.

A drain liquid volumeric flow rate calculation unit 306 is configured to calculate a volumeric flow rate of the drain liquid 46, based on the control output MVp. The volumeric flow rate is referred to as 'drain liquid volumeric flow rate Mp'. The drain liquid volumeric flow rate Mp may also be a volumeric flow rate necessary to adjust the temperature of the exhaust gas 30 measured by the temperature measurement unit 41 to a temperature close to the target temperature Tt.

The predetermined upper limit value and lower limit value of the volumeric flow rate of the drain liquid 46 are respectively referred to as 'upper limit volumeric flow rate Mp1' and 'lower limit volumeric flow rate Mp2'. The upper limit volumeric flow rate Mp1 and the lower limit volumeric flow rate Mp2 may be respectively an upper limit value and a lower limit value of the volumeric flow rate of the drain liquid 46 that can be controlled by the drain liquid volumeric flow rate control unit 75 (refer to FIG. 7).

A comparison unit 308 is configured to compare the drain liquid volumeric flow rate Mp and the upper limit volumeric flow rate Mp1. The comparison unit 308 is also configured to compare the drain liquid volumeric flow rate Mp and the lower limit volumeric flow rate Mp2. When the drain liquid volumeric flow rate Mp is equal to or smaller than the upper limit volumeric flow rate Mp1 and is equal to or larger than the lower limit volumeric flow rate Mp2 (Mp2≤Mp≤Mp1), the comparison unit 308 outputs the drain liquid volumeric flow rate Mp to the drain liquid volumeric flow rate control unit 75. When the drain liquid volumeric flow rate Mp is larger than the upper limit volumeric flow rate Mp1 (Mp> Mp1), the comparison unit 308 outputs the upper limit volumeric flow rate Mp1 to the drain liquid volumeric flow rate control unit 75. When the drain liquid volumeric flow rate Mp is equal to or smaller than the lower limit volumeric flow rate Mp2 (Mp ≤ Mp2), the comparison unit 308 outputs the lower limit volumeric flow rate Mp2 to the drain liquid volumeric flow rate control unit 75. The drain liquid volumeric flow rate control unit 75 is configured to control the volumeric flow rate of the drain liquid 46 so that the volumeric flow rate of the drain liquid 46 to be ejected from the spray unit 38 becomes the volumeric flow rate of the drain liquid 46 output by the comparison unit 308. Note that, the upper limit volumeric flow rate Mp1 and the lower limit volumeric flow rate Mp2 may be stored in the comparison unit 308.

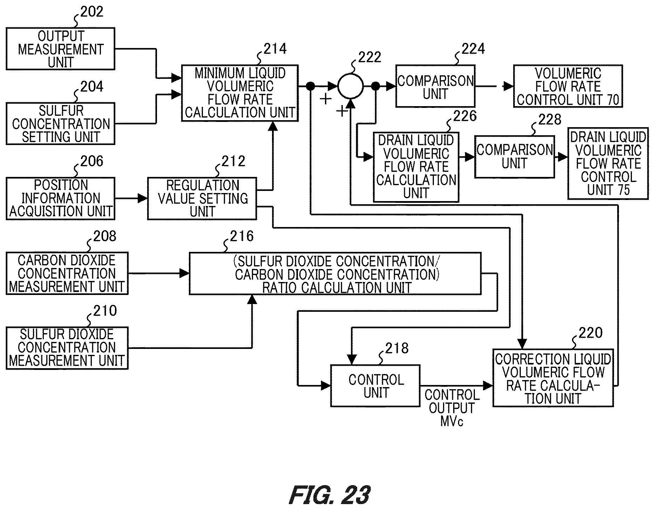

FIG. 23 is a block diagram showing an example of details of the volumeric flow rate control on the liquid 40 in step S120 of FIG. 20 and another example of details of the volumeric flow rate control on the drain liquid 46 in step S130. FIG. 23 shows an example of the volumeric flow rate controls on the liquid 40 and the drain liquid 46 in the exhaust gas treatment apparatus 100 shown in FIG. 9. The block diagram of the present example is different from the block diagram shown in FIG. 21, in that a drain liquid volumeric flow rate calculation unit 226 and a comparison unit 228 are further provided. In the present example, the drain liquid volumeric flow rate control unit 75 is configured to control the volumeric flow rate of the drain liquid 46 that is supplied to the spray unit 38, based on the volumeric flow rate of the liquid 40 (liquid volumeric flow rate Mc) that is controlled by the volumeric flow rate control unit 70. In the present example, the volumeric flow rate control unit 70 is configured to control the volumeric flow rate of the liquid 40, similar to the example shown in FIG. 21.

The drain liquid volumeric flow rate calculation unit 226 is configured to calculate a volumeric flow rate of the drain liquid 46, based on the volumeric flow rate of the liquid 40 to which the correction volumeric flow rate has been added by the addition unit 222. The volumeric flow rate of the drain liquid 46 is referred to as a drain liquid volumeric flow rate Mp'. The drain liquid volumeric flow rate calculation unit 226 may be configured to calculate the drain liquid volumeric flow rate Mp' so that the drain liquid volumeric flow rate Mp' becomes a predetermined ratio for the liquid volumeric flow rate Mc. The drain liquid volumeric flow rate calculation unit 226 may be configured to calculate the drain liquid volumeric flow rate Mp' to 1/10 or greater and 4/10 or smaller of the liquid volumeric flow rate Mc. The drain liquid volumeric flow rate calculation unit 226 is configured to control the drain liquid volumeric flow rate Mp' to 1/5 of the liquid volumeric flow rate Mc, for example.

The comparison unit 228 is configured to compare the drain liquid volumeric flow rate Mp' and the upper limit volumeric flow rate Mp1, similar to the comparison unit 308 in the example of FIG. 22. The comparison unit 228 is configured to compare the drain liquid volumeric flow rate Mp' and the lower limit volumeric flow rate Mp2, similar to the comparison unit 308 in the example of FIG. 22. The comparison unit 228 is configured to output a comparison result to the drain liquid volumeric flow rate control unit 75. The drain liquid volumeric flow rate control unit 75 is configured to control the volumeric flow rate of the drain liquid 46 so that the volumeric flow rate of the drain liquid 46 to be ejected from the spray unit 38 becomes the volumeric flow rate of the drain liquid 46 output by the comparison unit 228. Note that, the upper limit volumeric flow rate Mp1 and the lower limit volumeric flow rate Mp2 may be stored in the comparison unit 228.

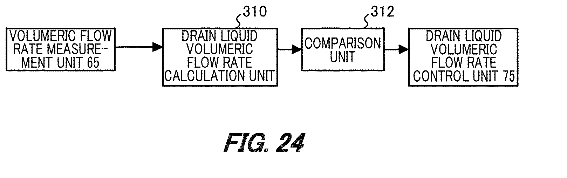

FIG. 24 is a block diagram showing another example of details of the volumeric flow rate control on the drain liquid 46 in step S130 of FIG. 20. FIG. 24 shows an example of the volumeric flow rate control on the drain liquid 46 in the exhaust gas treatment apparatus 100 shown in FIG. 10. The block diagram of the present example is different from the block diagram shown in FIG. 22, in that a drain liquid volumeric flow rate calculation unit 310 and a comparison unit 312 are respectively provided instead of the drain liquid volumeric flow rate calculation unit 306 and the comparison unit 308 in the block diagram of FIG. 22.

In the present example, the drain liquid volumeric flow rate control unit 75 is configured to control the volumeric flow rate of the drain liquid 46 that is supplied to the spray unit 38, based on the volumeric flow rate of the liquid 40 measured by the volumeric flow rate measurement unit 65. The volumeric flow rate of the liquid 40 is referred to as a liquid volumeric flow rate Mc'. The volumeric flow rate of the drain liquid 46 is referred to as a drain liquid volumeric flow rate Mp". The drain liquid volumeric flow rate calculation unit 310 may be configured to calculate the drain liquid volumeric flow rate Mp" so that the drain liquid volumeric flow rate Mp" becomes a predetermined ratio for the liquid volumeric flow rate Mc'. The drain liquid volumeric flow rate calculation unit 310 may be configured to control the drain liquid volumeric flow rate Mp" to 1/10 or greater and 4/10 or smaller of the liquid volumeric flow rate Mc'. The drain liquid volumeric flow rate calculation unit 310 is configured to control the drain liquid volumeric flow rate Mp" to 1/5 of the liquid volumeric flow rate Mc', for example.

The comparison unit 312 is configured to compare the drain liquid volumeric flow rate Mp" and the upper limit volumeric flow rate Mp1, similar to the comparison unit 308 in the example of FIG. 22. The comparison unit 312 is configured to compare the drain liquid volumeric flow rate Mp" and the lower limit volumeric flow rate Mp2, similar to the comparison unit 308 in the example of FIG. 22. The comparison unit 312 is configured to output a comparison result to the drain liquid volumeric flow rate control unit 75. The drain liquid volumeric flow rate control unit 75 is configured to control the volumeric flow rate of the drain liquid 46 so that the volumeric flow rate of the drain liquid 46 to be ejected from the spray unit 38 becomes the volumeric flow rate of the drain liquid 46 output by the comparison unit 312. Note that, the upper limit volumeric flow rate Mp1 and the lower limit volumeric flow rate Mp2 may be stored in the comparison unit 312.

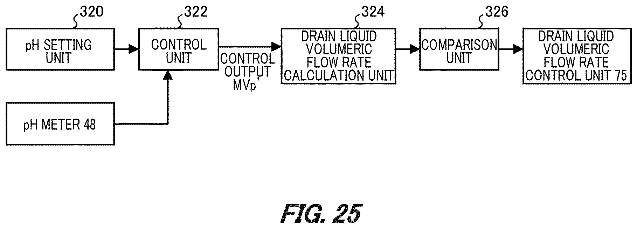

FIG. 25 is a block diagram showing another example of details of the volumeric flow rate control on the drain liquid 46 in step S130 of FIG. 20. FIG. 25 shows an example of the volumeric flow rate control on the drain liquid 46 in the exhaust gas treatment apparatus 100 shown in FIG. 8. The block diagram of the present example is different from the block diagram shown in FIG. 22, in that a pH setting unit 320 and a pH meter 48 are respectively provided instead of the temperature setting unit 302 and the temperature measurement unit 41 in the block diagram of FIG. 22. Also, the block diagram of the present example is different from the block diagram shown in FIG. 22, in that a control unit 322, a drain liquid volumeric flow rate calculation unit 324 and a comparison unit 326 are respectively provided instead of the control unit 304, the drain liquid volumeric flow rate calculation unit 306 and the comparison unit 308 in the block diagram of FIG. 22.

The pH meter 48 (refer FIG. 8) is configured to measure pH of the treatment liquid 47 (refer to FIG. 8). As described with reference to FIG. 8, the treatment liquid 47 is the drain liquid 46 obtained as a result of the drain liquid 46 sprayed from the spray unit 38 treating (physically absorbing) at least a part of sulfur oxides (SOₓ) contained in the exhaust gas 30.

In the present example, the drain liquid volumeric flow rate control unit 75 is configured to control the volumeric flow rate of the drain liquid 46 that is supplied to the spray unit 38, based on pH of the treatment liquid obtained as a result of the drain liquid 46 sprayed from the spray unit 38 treating the exhaust gas 30. The pH setting unit 320 is configured to set a target pH of the treatment liquid 47. The target pH may also be set by the user of the exhaust gas treatment apparatus 100. The target pH of the treatment liquid 47 may be 1.0 or greater and 4.0 or smaller. The target pH of the treatment liquid 47 is, for example, 2.5.

The control unit 322 is configured to output a control output MVp', based on pH of the treatment liquid 47 measured by the pH meter 48 and the target pH set by the pH setting unit 320. The control unit 322 may also be configured to output the control output MVp' by PID control.

The drain liquid volumeric flow rate calculation unit 324 is configured to calculate a volumeric flow rate of the drain liquid 46, based on the control output MVp'. The volumeric flow rate is referred to as a drain liquid volumeric flow rate Mp'". The drain liquid volumeric flow rate Mp'" may also be a volumeric flow rate necessary to adjust pH of the treatment liquid 47 measured by the pH meter 48 to pH close to the target pH.

The comparison unit 326 is configured to compare the drain liquid volumeric flow rate Mp'" and the upper limit volumeric flow rate Mp1, similar to the comparison unit 308 in the example of FIG. 22. The comparison unit 326 is configured to compare the drain liquid volumeric flow rate Mp'" and the lower limit volumeric flow rate Mp2, similar to the comparison unit 308 in the example of FIG. 22. The comparison unit 326 is configured to output a comparison result to the drain liquid volumeric flow rate control unit 75. The drain liquid volumeric flow rate control unit 75 is configured to control the volumeric flow rate of the drain liquid 46 so that the volumeric flow rate of the drain liquid 46 to be ejected from the spray unit 38 becomes the volumeric flow rate of the drain liquid 46 output by the comparison unit 326. Note that, the upper limit volumeric flow rate Mp1 and the lower limit volumeric flow rate Mp2 may be stored in the comparison unit 326.

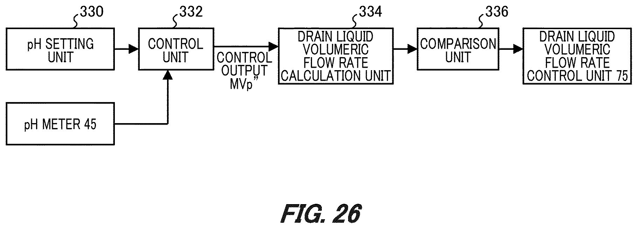

FIG. 26 is a block diagram showing another example of details of the volumeric flow rate control on the drain liquid 46 in step S130 of FIG. 20. FIG. 26 shows an example of the volumeric flow rate control on the drain liquid 46 in the exhaust gas treatment apparatus 100 shown in FIG. 14. The block diagram of the present example is different from the block diagram shown in FIG. 25, in that a pH setting unit 330, a control unit 332, a drain liquid volumeric flow rate calculation unit 334 and a comparison unit 336 are respectively provided instead of the pH setting unit 320, the control unit 322, the drain liquid volumeric flow rate calculation unit 324 and the comparison unit 326 in the block diagram of FIG. 25.

The pH meter 45 (refer FIG. 14) is configured to measure pH of the drain water 43 (refer to FIG. 14). As described with reference to FIG. 14, the drain water 43 is a liquid in which the treatment liquid 47 discharged from the discharge pipe 58 and the drain liquid 46 discharged from the reaction tower 10 and treating the exhaust gas 30 are mixed.

In the present example, the drain liquid volumeric flow rate control unit 75 is configured to control a volumeric flow rate of the drain liquid 46 that is supplied to the spray unit 38, based on pH of the drain water 43. The pH setting unit 330 is configured to set a target pH' of the drain water 43. The target pH' may also be set by the user of the exhaust gas treatment apparatus 100. The target pH' of the drain water 43 may be 1.0 or greater and 5.0 or smaller. The target pH' of the drain water 43 is, for example, 3.0.

The control unit 332 is configured to output a control output MVp", based on pH of the drain water 43 measured by the pH meter 45 and the target pH' set by the pH setting unit 330. The control unit 332 may also be configured to output the control output MVp" by PID control.

The drain liquid volumeric flow rate calculation unit 334 is configured to calculate a volumeric flow rate of the drain liquid 46, based on the control output MVp". The volumeric flow rate is referred to as a drain liquid volumeric flow rate Mpp. The drain liquid volumeric flow rate Mpp may also be a volumeric flow rate necessary to adjust pH of the drain water 43 measured by the pH meter 45 to pH close to the target pH'.

The comparison unit 336 is configured to compare the drain liquid volumeric flow rate Mpp and the upper limit volumeric flow rate Mp1, similar to the comparison unit 308 in the example of FIG. 22. The comparison unit 336 is configured to compare the drain liquid volumeric flow rate Mpp and the lower limit volumeric flow rate Mp2, similar to the comparison unit 308 in the example of FIG. 22. The comparison unit 336 is configured to output a comparison result to the drain liquid volumeric flow rate control unit 75. The drain liquid volumeric flow rate control unit 75 is configured to control the volumeric flow rate of the drain liquid 46 so that the volumeric flow rate of the drain liquid 46 to be ejected from the spray unit 38 becomes the volumeric flow rate of the drain liquid 46 output by the comparison unit 336. Note that, the upper limit volumeric flow rate Mp1 and the lower limit volumeric flow rate Mp2 may be stored in the comparison unit 336.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.
[Item 1] An exhaust gas treatment apparatus comprising:
   a reaction tower into which an exhaust gas is introduced and a liquid for treating the exhaust gas is supplied;
   a first ejection unit configured to eject the liquid into the reaction tower;
   a volumeric flow rate control unit configured to control a volumeric flow rate of the liquid that is supplied to the reaction tower;
   an exhaust gas introduction pipe configured to introduce the exhaust gas into the reaction tower; and
   a spray unit configured to spray a drain liquid obtained as a result of treating the exhaust gas to the exhaust gas, in the exhaust gas introduction pipe or in the vicinity of the exhaust gas introduction pipe inside the reaction tower, wherein
   the volumeric flow rate control unit is configured to control the volumeric flow rate of the liquid that is supplied to the reaction tower, based on at least one of pH and total alkalinity of the drain liquid.
[Item 2] The exhaust gas treatment apparatus according to Item 1, wherein
   the volumeric flow rate control unit is configured to control the volumeric flow rate of the liquid that is supplied to the reaction tower so that pH of the drain liquid becomes equal to or smaller than 4.
[Item 3] The exhaust gas treatment apparatus according to Item 1, wherein
   the volumeric flow rate control unit is configured to control the volumeric flow rate of the liquid that is supplied to the reaction tower so that the total alkalinity of the drain liquid becomes equal to or smaller than 5mg/L.
[Item 4] The exhaust gas treatment apparatus according to any one of Items 1 to 3, further comprising a second ejection unit configured to eject the liquid into the reaction tower, wherein
   the first ejection unit is provided on one of an introduction-side and a discharge-side of the exhaust gas inside the reaction tower,
   the second ejection unit is provided on the other of the introduction-side and the discharge-side of the exhaust gas inside the reaction tower, and
   the volumeric flow rate control unit is configured to control a volumeric flow rate of the liquid that is supplied to at least one of the first ejection unit and the second ejection unit.
[Item 5] The exhaust gas treatment apparatus according to Item 4, wherein
   the reaction tower is configured to generate a purified gas obtained as a result of the exhaust gas being treated by the liquid inside the reaction tower, and
   the volumeric flow rate control unit is configured to control the volumeric flow rate of the liquid that is supplied to at least one of the first ejection unit and the second ejection unit, based on a concentration of sulfur dioxide and a concentration of carbon dioxide in the purified gas.
[Item 6] The exhaust gas treatment apparatus according to Item 4 or 5, wherein
   the first ejection unit is provided on the introduction-side of the exhaust gas,
   the second ejection unit is provided on the discharge-side of the exhaust gas, and
   the volumeric flow rate control unit is configured to control a volumeric flow rate of the liquid that is supplied to the second ejection unit, based on a volumeric flow rate of the liquid that is supplied to the first ejection unit.
[Item 7] The exhaust gas treatment apparatus according to Item 6, wherein
   the volumeric flow rate control unit is configured to increase the volumeric flow rate of the liquid that is supplied to the second ejection unit, when reducing the volumeric flow rate of the liquid that is supplied to the first ejection unit.
[Item 8] The exhaust gas treatment apparatus according to Item 6 or 7, wherein
   the liquid that is ejected from at least one of the first ejection unit and the second ejection unit treats the exhaust gas while advancing from the discharge-side toward the introduction-side of the exhaust gas, inside the reaction tower, and
   the volumeric flow rate control unit is configured to control the volumeric flow rate of the liquid that is supplied to the reaction tower, based on at least one of pH and total alkalinity of the drain liquid closer to the introduction-side of the exhaust gas than the first ejection unit, in a direction facing from the introduction-side toward the discharge-side of the exhaust gas.
[Item 9] The exhaust gas treatment apparatus according to any one of Items 6 to 8, further comprising a liquid supply unit, wherein
   the liquid supply unit is configured to supply, to the first ejection unit, the liquid ejected from the second ejection unit and treating the exhaust gas.
[Item 10] The exhaust gas treatment apparatus according to any one of Items 1 to 9, further comprising a first heat exchanger configured to cool the drain liquid, wherein
   the spray unit is configured to spray the drain liquid cooled by the first heat exchanger to the exhaust gas.
[Item 11] The exhaust gas treatment apparatus according to any one of Items 1 to 10, wherein
   the exhaust gas introduction pipe has:
   a first part which is provided at a predetermined first height and through which the exhaust gas passes, and
   a second part which is provided at a predetermined second height higher than the first height and through which the exhaust gas passes,
   the first part is connected to the reaction tower, and
   the spray unit is configured to spray the drain liquid to the exhaust gas passing through the first part.
[Item 12] The exhaust gas treatment apparatus according to any one of Items 1 to 10, wherein
   the exhaust gas introduction pipe has:
   a first part which is provided at a predetermined first height and through which the exhaust gas passes,
   a second part which is provided at a predetermined second height higher than the first height and through which the exhaust gas passes, and
   a connecting part whose one end is connected to the first part and other end is connected to the second part and through which the exhaust gas passes,
   the first part is connected to the reaction tower, and
   the spray unit is configured to spray the drain liquid to the exhaust gas passing through the connecting part.
[Item 13] The exhaust gas treatment apparatus according to Item 12, wherein
   the exhaust gas introduction pipe has a pipe body and a gas passage part provided inside the pipe body, the exhaust gas passing through the gas passage part, and
   a cross-sectional area of the gas passage part in a plane orthogonal to a direction in which the exhaust gas passes between the one end and the other end of the connecting part is smaller than a cross-sectional area of the gas passage part in the plane at the one end and smaller than a cross-sectional area of the gas passage part in the plane at the other end.
[Item 14] The exhaust gas treatment apparatus according to any one of Items 11 to 13, further comprising:
   a drain liquid volumeric flow rate control unit configured to control a volumeric flow rate of the drain liquid that is supplied to the spray unit, and
   a discharge pipe configured to discharge a treatment liquid, which is obtained as a result of the drain liquid sprayed by the spray unit treating the exhaust gas, to an outside of the exhaust gas introduction pipe, wherein
   the drain liquid volumeric flow rate control unit is configured to control the volumeric flow rate of the drain liquid that is supplied to the spray unit, based on at least one of pH and total alkalinity of drain water in which the treatment liquid discharged from the discharge pipe and the drain liquid discharged from the reaction tower and treating the exhaust gas are mixed.
[Item 15] The exhaust gas treatment apparatus according to Item 14, further comprising a second heat exchanger configured to recover heat of the drain liquid discharged from the exhaust gas introduction pipe to the discharge pipe.
[Item 16] The exhaust gas treatment apparatus according to any one of Items 11 to 13, further comprising a drain liquid volumeric flow rate control unit configured to control a volumeric flow rate of the drain liquid that is supplied to the spray unit, wherein
   the drain liquid volumeric flow rate control unit is configured to control the volumeric flow rate of the drain liquid that is supplied to the spray unit, based on at least one of pH and total alkalinity of a treatment liquid obtained as a result of the drain liquid sprayed by the spray unit treating the exhaust gas.
[Item 17] The exhaust gas treatment apparatus according to any one of Items 11 to 13, further comprising:
   a drain liquid volumeric flow rate control unit configured to control a volumeric flow rate of the drain liquid that is supplied to the spray unit, and
   a temperature measurement unit configured to measure a temperature of the exhaust gas, wherein
   the drain liquid volumeric flow rate control unit is configured to control the volumeric flow rate of the drain liquid that is supplied to the spray unit, based on a temperature of the exhaust gas measured by the temperature measurement unit.
[Item 18] The exhaust gas treatment apparatus according to any one of Items 11 to 13, further comprising a drain liquid volumeric flow rate control unit configured to control a volumeric flow rate of the drain liquid that is supplied to the spray unit, wherein
   the drain liquid volumeric flow rate control unit is configured to control the volumeric flow rate of the drain liquid that is supplied to the spray unit, based on a volumeric flow rate of the liquid that is controlled by the volumeric flow rate control unit.
[Item 19] The exhaust gas treatment apparatus according to any one of Items 11 to 13, further comprising:
   a drain liquid volumeric flow rate control unit configured to control a volumeric flow rate of the drain liquid that is supplied to the spray unit, and
   a volumeric flow rate measurement unit configured to measure a volumeric flow rate of the liquid that is supplied to the reaction tower, wherein
   the drain liquid volumeric flow rate control unit is configured to control the volumeric flow rate of the drain liquid that is supplied to the spray unit, based on a volumeric flow rate of the liquid measured by the volumeric flow rate measurement unit.
[Item 20] The exhaust gas treatment apparatus according to any one of Items 11 to 19, wherein
   the exhaust gas introduction pipe is provided therein with a filling material for enlarging a surface area of the drain liquid.
[Item 21] The exhaust gas treatment apparatus according to any one of Items 11 to 20, wherein
   the exhaust gas introduction pipe further has a third part through which the exhaust gas passes,
   the third part is provided at a predetermined third height lower than the first height and the second height, and
   the third part is configured to stay the drain liquid.
[Item 22] The exhaust gas treatment apparatus according to any one of Items 11 to 21, further comprising an economiser provided to the exhaust gas introduction pipe and configured to cool the exhaust gas.
[Item 23] The exhaust gas treatment apparatus according to any one of Items 1 to 22, further comprising a dilution unit configured to dilute the drain liquid with at least a part of the liquid.
[Item 24] The exhaust gas treatment apparatus according to any one of Items 1 to 23, wherein
   the exhaust gas is discharged from at least one of a main engine and an auxiliary engine of a ship.

### EXPLANATION OF REFERENCES

10: reaction tower, 11: gas introduction opening, 12: trunk tube, 13: first branch pipe, 14: first ejection unit, 15: sidewall, 16: bottom surface, 17: gas outlet, 18: gas treatment part, 19: liquid outlet, 20: drain water pipe, 22: introduction part, 23: recovery pipe, 24: bottom surface, 25: introduction pipe, 26: side surface, 27: recovery pipe, 29: supply pipe, 30: exhaust gas, 32: exhaust gas introduction pipe, 33: first part, 34: purified gas, 35: second part, 37: connecting part, 38: spray unit, 39: leading part, 40: liquid, 41: temperature measurement unit, 42: pH meter, 43: drain water, 44: liquid, 45: pH meter, 46: drain liquid, 47: treatment liquid, 48: pH meter, 49: total alkalinity meter, 50: power apparatus, 51: auxiliary power apparatus, 52: one end, 53: total alkalinity meter, 54: other end, 55: total alkalinity meter, 56: drain liquid outlet, 57: treatment liquid outlet, 58: discharge pipe, 59: leading part, 60: first pump, 61: third part, 62: second pump, 63: filling material, 65: volumeric flow rate measurement unit, 67: pipe, 70: volumeric flow rate control unit, 72: valve, 73: concentration measurement unit, 74: liquid supply unit, 75: drain liquid volumeric flow rate control unit, 77: valve, 80: first heat exchanger, 82: second heat exchanger, 83: second branch pipe, 84: second ejection unit, 90: dilution unit, 100: exhaust gas treatment apparatus, 110: pipe body, 112: outer surface, 114: inner surface, 116: gas passage part, 130: economiser, 202: output measurement unit, 204: sulfur concentration setting unit, 206: position information acquisition unit, 208: carbon dioxide concentration measurement unit, 210: sulfur dioxide concentration measurement unit, 212: regulation value setting unit, 214: minimum liquid volumeric flow rate calculation unit, 216: (sulfur dioxide concentration/carbon dioxide concentration) ratio calculation unit, 218: control unit, 220: correction liquid volumeric flow rate calculation unit, 222: addition unit, 224: comparison unit, 226: drain liquid volumeric flow rate calculation unit, 228: comparison unit, 302: temperature setting unit, 304: control unit, 306: drain liquid volumeric flow rate calculation unit, 308: comparison unit, 310: drain liquid volumeric flow rate calculation unit, 312: comparison unit, 320: pH setting unit, 322: control unit, 324: drain liquid volumeric flow rate calculation unit, 326: comparison unit, 330: pH setting unit, 332: control unit, 334: drain liquid volumeric flow rate calculation unit, 336: comparison unit

## Claims

1. An exhaust gas treatment apparatus comprising:
a reaction tower into which an exhaust gas is introduced and a liquid for treating the exhaust gas is supplied;
a first ejection unit configured to eject the liquid into the reaction tower;
a volumeric flow rate control unit configured to control a volumeric flow rate of the liquid that is supplied to the reaction tower;
an exhaust gas introduction pipe configured to introduce the exhaust gas into the reaction tower; and
a spray unit configured to spray a drain liquid obtained as a result of treating the exhaust gas to the exhaust gas, in the exhaust gas introduction pipe or in the vicinity of the exhaust gas introduction pipe inside the reaction tower, wherein
the volumeric flow rate control unit is configured to control the volumeric flow rate of the liquid that is supplied to the reaction tower, based on at least one of pH and total alkalinity of the drain liquid.

2. The exhaust gas treatment apparatus according to Claim 1, wherein
the volumeric flow rate control unit is configured to control the volumeric flow rate of the liquid that is supplied to the reaction tower so that the pH of the drain liquid becomes equal to or smaller than 4.

3. The exhaust gas treatment apparatus according to Claim 1, wherein
the volumeric flow rate control unit is configured to control the volumeric flow rate of the liquid that is supplied to the reaction tower so that the total alkalinity of the drain liquid becomes equal to or smaller than 5mg/L.

4. The exhaust gas treatment apparatus according to any one of Claims 1 to 3, further comprising a second ejection unit configured to eject the liquid into the reaction tower, wherein
the first ejection unit is provided on one of an introduction-side and a discharge-side of the exhaust gas inside the reaction tower,
the second ejection unit is provided on the other of the introduction-side and the discharge-side of the exhaust gas inside the reaction tower, and
the volumeric flow rate control unit is configured to control a volumeric flow rate of the liquid that is supplied to at least one of the first ejection unit and the second ejection unit.

5. The exhaust gas treatment apparatus according to Claim 4, wherein
the reaction tower is configured to generate a purified gas obtained as a result of the exhaust gas being treated by the liquid inside the reaction tower, and
the volumeric flow rate control unit is configured to control the volumeric flow rate of the liquid that is supplied to at least one of the first ejection unit and the second ejection unit, based on a concentration of sulfur dioxide and a concentration of carbon dioxide in the purified gas.

6. The exhaust gas treatment apparatus according to Claim 4 or 5, wherein
the first ejection unit is provided on the introduction-side of the exhaust gas,
the second ejection unit is provided on the discharge-side of the exhaust gas,
and
the volumeric flow rate control unit is configured to control the volumeric flow rate of the liquid that is supplied to the second ejection unit, based on the volumeric flow rate of the liquid that is supplied to the first ejection unit.

7. The exhaust gas treatment apparatus according to Claim 6, wherein
the volumeric flow rate control unit is configured to increase the volumeric flow rate of the liquid that is supplied to the second ejection unit, when reducing the volumeric flow rate of the liquid that is supplied to the first ejection unit.

8. The exhaust gas treatment apparatus according to Claim 6 or 7, wherein
the liquid that is ejected from at least one of the first ejection unit and the second ejection unit treats the exhaust gas while advancing from the discharge-side toward the introduction-side of the exhaust gas, inside the reaction tower, and
the volumeric flow rate control unit is configured to control the volumeric flow rate of the liquid that is supplied to the reaction tower, based on at least one of pH and total alkalinity of the drain liquid closer to the introduction-side of the exhaust gas than the first ejection unit, in a direction facing from the introduction-side toward the discharge-side of the exhaust gas.

9. The exhaust gas treatment apparatus according to any one of Claims 6 to 8, further comprising a liquid supply unit, wherein
the liquid supply unit is configured to supply, to the first ejection unit, the liquid ejected from the second ejection unit and treating the exhaust gas.

10. The exhaust gas treatment apparatus according to any one of Claims 1 to 9, further comprising a first heat exchanger configured to cool the drain liquid, wherein
the spray unit is configured to spray the drain liquid cooled by the first heat exchanger to the exhaust gas.

11. The exhaust gas treatment apparatus according to any one of Claims 1 to 10, wherein
the exhaust gas introduction pipe has:
a first part which is provided at a predetermined first height and through which the exhaust gas passes; and
a second part which is provided at a predetermined second height higher than the first height and through which the exhaust gas passes,
the first part is connected to the reaction tower, and
the spray unit is configured to spray the drain liquid to the exhaust gas passing through the first part.

12. The exhaust gas treatment apparatus according to any one of Claims 1 to 10, wherein
the exhaust gas introduction pipe has:
a first part which is provided at a predetermined first height and through which the exhaust gas passes;
a second part which is provided at a predetermined second height higher than the first height and through which the exhaust gas passes; and
a connecting part whose one end is connected to the first part and other end is connected to the second part and through which the exhaust gas passes,
the first part is connected to the reaction tower, and
the spray unit is configured to spray the drain liquid to the exhaust gas passing through the connecting part.

13. The exhaust gas treatment apparatus according to Claim 12, wherein
the exhaust gas introduction pipe has:
a pipe body; and
a gas passage part provided inside the pipe body, the exhaust gas passing through the gas passage part, and
a cross-sectional area of the gas passage part in a plane orthogonal to a direction in which the exhaust gas passes between the one end and the other end of the connecting part is smaller than a cross-sectional area of the gas passage part in the plane at the one end and smaller than a cross-sectional area of the gas passage part in the plane at the other end.

14. The exhaust gas treatment apparatus according to any one of Claims 11 to 13, further comprising:
a drain liquid volumeric flow rate control unit configured to control a volumeric flow rate of the drain liquid that is supplied to the spray unit; and
a discharge pipe configured to discharge a treatment liquid, which is obtained as a result of the drain liquid sprayed by the spray unit treating the exhaust gas, to an outside of the exhaust gas introduction pipe, wherein
the drain liquid volumeric flow rate control unit is configured to control the volumeric flow rate of the drain liquid that is supplied to the spray unit, based on at least one of pH and total alkalinity of drain water in which the treatment liquid discharged from the discharge pipe and the drain liquid discharged from the reaction tower and treating the exhaust gas are mixed.

15. The exhaust gas treatment apparatus according to Claim 14, further comprising a second heat exchanger configured to recover heat of the drain liquid discharged from the exhaust gas introduction pipe to the discharge pipe.

16. The exhaust gas treatment apparatus according to any one of Claims 11 to 13, further comprising a drain liquid volumeric flow rate control unit configured to control a volumeric flow rate of the drain liquid that is supplied to the spray unit, wherein
the drain liquid volumeric flow rate control unit is configured to control the volumeric flow rate of the drain liquid that is supplied to the spray unit, based on at least one of pH and total alkalinity of a treatment liquid obtained as a result of the drain liquid sprayed by the spray unit treating the exhaust gas.

17. The exhaust gas treatment apparatus according to any one of Claims 11 to 13, further comprising:
a drain liquid volumeric flow rate control unit configured to control a volumeric flow rate of the drain liquid that is supplied to the spray unit; and
a temperature measurement unit configured to measure a temperature of the exhaust gas, wherein
the drain liquid volumeric flow rate control unit is configured to control the volumeric flow rate of the drain liquid that is supplied to the spray unit, based on the temperature of the exhaust gas measured by the temperature measurement unit.

18. The exhaust gas treatment apparatus according to any one of Claims 11 to 13, further comprising a drain liquid volumeric flow rate control unit configured to control a volumeric flow rate of the drain liquid that is supplied to the spray unit, wherein
the drain liquid volumeric flow rate control unit is configured to control the volumeric flow rate of the drain liquid that is supplied to the spray unit, based on a volumeric flow rate of the liquid that is controlled by the volumeric flow rate control unit.

19. The exhaust gas treatment apparatus according to any one of Claims 11 to 13, further comprising:
a drain liquid volumeric flow rate control unit configured to control a volumeric flow rate of the drain liquid that is supplied to the spray unit; and
a volumeric flow rate measurement unit configured to measure a volumeric flow rate of the liquid that is supplied to the reaction tower, wherein
the drain liquid volumeric flow rate control unit is configured to control the volumeric flow rate of the drain liquid that is supplied to the spray unit, based on a volumeric flow rate of the liquid measured by the volumeric flow rate measurement unit.

20. The exhaust gas treatment apparatus according to any one of Claims 11 to 19, wherein
the exhaust gas introduction pipe is provided therein with a filling material for enlarging a surface area of the drain liquid.

21. The exhaust gas treatment apparatus according to any one of Claims 11 to 20, wherein
the exhaust gas introduction pipe further has a third part through which the exhaust gas passes,
the third part is provided at a predetermined third height lower than the first height and the second height, and
the third part is configured to stay the drain liquid.

22. The exhaust gas treatment apparatus according to any one of Claims 11 to 21, further comprising an economiser provided to the exhaust gas introduction pipe and configured to cool the exhaust gas.

23. The exhaust gas treatment apparatus according to any one of Claims 1 to 22, further comprising a dilution unit configured to dilute the drain liquid with at least a part of the liquid.

24. The exhaust gas treatment apparatus according to any one of Claims 1 to 23, wherein
the exhaust gas is discharged from at least one of a main engine and an auxiliary engine of a ship.

## Amended claims

### Amended claims under Art. 19.1 PCT

1. An exhaust gas treatment apparatus comprising:
a reaction tower into which an exhaust gas is introduced and a liquid for treating the exhaust gas is supplied;
a first ejection unit configured to eject the liquid into the reaction tower;
a volumeric flow rate control unit configured to control a volumeric flow rate of the liquid that is supplied to the reaction tower;
an exhaust gas introduction pipe configured to introduce the exhaust gas into the reaction tower; and
a spray unit configured to spray a drain liquid obtained as a result of treating the exhaust gas to the exhaust gas, in the exhaust gas introduction pipe or in the vicinity of the exhaust gas introduction pipe inside the reaction tower, wherein
the volumeric flow rate control unit is configured to control the volumeric flow rate of the liquid that is supplied to the reaction tower, based on at least one of pH and total alkalinity of the drain liquid.

2. The exhaust gas treatment apparatus according to Claim 1, wherein
the spray unit is configured is configured to spray the drain liquid to the exhaust gas in an advancing direction of the exhaust gas in the exhaust gas introduction pipe.

3. The exhaust gas treatment apparatus according to Claim 1 or 2, wherein
the volumeric flow rate control unit is configured to control the volumeric flow rate of the liquid that is supplied to the reaction tower so that the pH of the drain liquid becomes equal to or smaller than 4.

4. The exhaust gas treatment apparatus according to Claim 1 or 2, wherein
the volumeric flow rate control unit is configured to control the volumeric flow rate of the liquid that is supplied to the reaction tower so that the total alkalinity of the drain liquid becomes equal to or smaller than 5mg/L.

5. The exhaust gas treatment apparatus according to any one of Claims 1 to 4, further comprising a second ejection unit configured to eject the liquid into the reaction tower, wherein
the first ejection unit is provided on one of an introduction-side and a discharge-side of the exhaust gas inside the reaction tower,
the second ejection unit is provided on the other of the introduction-side and the discharge-side of the exhaust gas inside the reaction tower, and
the volumeric flow rate control unit is configured to control a volumeric flow rate of the liquid that is supplied to at least one of the first ejection unit and the second ejection unit.

6. The exhaust gas treatment apparatus according to Claim 5, wherein
the reaction tower is configured to generate a purified gas obtained as a result of the exhaust gas being treated by the liquid inside the reaction tower, and
the volumeric flow rate control unit is configured to control the volumeric flow rate of the liquid that is supplied to at least one of the first ejection unit and the second ejection unit, based on a concentration of sulfur dioxide and a concentration of carbon dioxide in the purified gas.

7. The exhaust gas treatment apparatus according to Claim 5 or 6, wherein
the first ejection unit is provided on the introduction-side of the exhaust gas,
the second ejection unit is provided on the discharge-side of the exhaust gas, and
the volumeric flow rate control unit is configured to control the volumeric flow rate of the liquid that is supplied to the second ejection unit, based on the volumeric flow rate of the liquid that is supplied to the first ejection unit.

8. The exhaust gas treatment apparatus according to Claim 7, wherein
the volumeric flow rate control unit is configured to increase the volumeric flow rate of the liquid that is supplied to the second ejection unit, when reducing the volumeric flow rate of the liquid that is supplied to the first ejection unit.

9. The exhaust gas treatment apparatus according to Claim 7 or 8, wherein
the liquid that is ejected from at least one of the first ejection unit and the second ejection unit treats the exhaust gas while advancing from the discharge-side toward the introduction-side of the exhaust gas, inside the reaction tower, and
the volumeric flow rate control unit is configured to control the volumeric flow rate of the liquid that is supplied to the reaction tower, based on at least one of pH and total alkalinity of the drain liquid closer to the introduction-side of the exhaust gas than the first ejection unit, in a direction facing from the introduction-side toward the discharge-side of the exhaust gas.

10. The exhaust gas treatment apparatus according to any one of Claims 7 to 9, further comprising a liquid supply unit, wherein
the liquid supply unit is configured to supply, to the first ejection unit, the liquid ejected from the second ejection unit and treating the exhaust gas.

11. The exhaust gas treatment apparatus according to any one of Claims 1 to 10, further comprising a first heat exchanger configured to cool the drain liquid, wherein
the spray unit is configured to spray the drain liquid cooled by the first heat exchanger to the exhaust gas.

12. The exhaust gas treatment apparatus according to any one of Claims 1 to 11, wherein
the exhaust gas introduction pipe has:
a first part which is provided at a predetermined first height and through which the exhaust gas passes; and
a second part which is provided at a predetermined second height higher than the first height and through which the exhaust gas passes,
the first part is connected to the reaction tower, and
the spray unit is configured to spray the drain liquid to the exhaust gas passing through the first part.

13. The exhaust gas treatment apparatus according to any one of Claims 1 to 11, wherein
the exhaust gas introduction pipe has:
a first part which is provided at a predetermined first height and through which the exhaust gas passes;
a second part which is provided at a predetermined second height higher than the first height and through which the exhaust gas passes; and
a connecting part whose one end is connected to the first part and other end is connected to the second part and through which the exhaust gas passes,
the first part is connected to the reaction tower, and
the spray unit is configured to spray the drain liquid to the exhaust gas passing through the connecting part.

14. The exhaust gas treatment apparatus according to Claim 13, wherein
the exhaust gas introduction pipe has:
a pipe body; and
a gas passage part provided inside the pipe body, the exhaust gas passing through the gas passage part, and
a cross-sectional area of the gas passage part in a plane orthogonal to a direction in which the exhaust gas passes between the one end and the other end of the connecting part is smaller than a cross-sectional area of the gas passage part in the plane at the one end and smaller than a cross-sectional area of the gas passage part in the plane at the other end.

15. The exhaust gas treatment apparatus according to any one of Claims 12 to 14, wherein
the exhaust gas introduction pipe further has a third part through which the exhaust gas passes,
the third part is provided at a predetermined third height lower than the first height and the second height, and
the third part is configured to stay the drain liquid.

16. The exhaust gas treatment apparatus according to any one of Claims 1 to 15, further comprising:
a drain liquid volumeric flow rate control unit configured to control a volumeric flow rate of the drain liquid that is supplied to the spray unit; and
a discharge pipe configured to discharge a treatment liquid, which is obtained as a result of the drain liquid sprayed by the spray unit treating the exhaust gas, to an outside of the exhaust gas introduction pipe, wherein
the drain liquid volumeric flow rate control unit is configured to control the volumeric flow rate of the drain liquid that is supplied to the spray unit, based on at least one of pH and total alkalinity of drain water in which the treatment liquid discharged from the discharge pipe and the drain liquid discharged from the reaction tower and treating the exhaust gas are mixed.

17. The exhaust gas treatment apparatus according to Claim 16, further comprising a second heat exchanger configured to recover heat of the drain liquid discharged from the exhaust gas introduction pipe to the discharge pipe.

18. The exhaust gas treatment apparatus according to any one of Claims 1 to 15, further comprising a drain liquid volumeric flow rate control unit configured to control a volumeric flow rate of the drain liquid that is supplied to the spray unit, wherein
the drain liquid volumeric flow rate control unit is configured to control the volumeric flow rate of the drain liquid that is supplied to the spray unit, based on at least one of pH and total alkalinity of a treatment liquid obtained as a result of the drain liquid sprayed by the spray unit treating the exhaust gas.

19. The exhaust gas treatment apparatus according to any one of Claims 1 to 15, further comprising:
a drain liquid volumeric flow rate control unit configured to control a volumeric flow rate of the drain liquid that is supplied to the spray unit; and
a temperature measurement unit configured to measure a temperature of the exhaust gas, wherein
the drain liquid volumeric flow rate control unit is configured to control the volumeric flow rate of the drain liquid that is supplied to the spray unit, based on the temperature of the exhaust gas measured by the temperature measurement unit.

20. The exhaust gas treatment apparatus according to any one of Claims 1 to 15, further comprising a drain liquid volumeric flow rate control unit configured to control a volumeric flow rate of the drain liquid that is supplied to the spray unit, wherein
the drain liquid volumeric flow rate control unit is configured to control the volumeric flow rate of the drain liquid that is supplied to the spray unit, based on a volumeric flow rate of the liquid that is controlled by the volumeric flow rate control unit.

21. The exhaust gas treatment apparatus according to any one of Claims 1 to 15, further comprising:
a drain liquid volumeric flow rate control unit configured to control a volumeric flow rate of the drain liquid that is supplied to the spray unit; and
a volumeric flow rate measurement unit configured to measure a volumeric flow rate of the liquid that is supplied to the reaction tower, wherein
the drain liquid volumeric flow rate control unit is configured to control the volumeric flow rate of the drain liquid that is supplied to the spray unit, based on a volumeric flow rate of the liquid measured by the volumeric flow rate measurement unit.

22. The exhaust gas treatment apparatus according to any one of Claims 1 to 21, wherein
the exhaust gas introduction pipe is provided therein with a filling material for enlarging a surface area of the drain liquid, and
the exhaust gas before being treated by the liquid passes through the filling material.

23. The exhaust gas treatment apparatus according to any one of Claims 1 to 22, further comprising an economiser provided to the exhaust gas introduction pipe and configured to cool the exhaust gas.

24. The exhaust gas treatment apparatus according to any one of Claims 1 to 23, further comprising a dilution unit configured to dilute the drain liquid with at least a part of the liquid.

25. The exhaust gas treatment apparatus according to any one of Claims 1 to 24, wherein
the exhaust gas is discharged from at least one of a main engine and an auxiliary engine of a ship.
